(19) Europäisches Patentamt / European Patent Office / Office européen des brevets

(11) **EP 2 278 390 A1**

(12) **EUROPEAN PATENT APPLICATION**

(43) Date of publication:
**26.01.2011 Bulletin 2011/04**

(51) Int Cl.:
*G02F 1/1343* (2006.01)   *G06K 19/077* (2006.01)
*G02F 1/1339* (2006.01)   *G02F 1/1341* (2006.01)
*G02F 1/137* (2006.01)   *G09G 3/36* (2006.01)

(21) Application number: **10180396.3**

(22) Date of filing: **04.09.2003**

(84) Designated Contracting States:
**DE FR GB**

(62) Document number(s) of the earlier application(s) in accordance with Art. 76 EPC:
**03818572.4 / 1 662 304**

(71) Applicants:
- **FUJITSU LIMITED**
  **Kawasaki-shi,**
  **Kanagawa 211-8588 (JP)**
- **Fujitsu Frontech Limited**
  **Inagi-shi,**
  **Tokyo 206-8555 (JP)**

(72) Inventors:
- **Tomita, Junji**
  **Kawasaki-shi, Kanagawa 211-8588 (JP)**
- **Nose, Masaki**
  **Kawasaki-shi, Kanagawa 211-8588 (JP)**
- **Shingai, Tomohisa**
  **Kawasaki-shi, Kanagawa 211-8588 (JP)**
- **Yamagishi, Fumio**
  **Kawasaki-shi, Kanagawa 211-8588 (JP)**
- **Hashimoto, Shigeru**
  **Inagi-shi Tokyo 206-8555 (JP)**
- **Sugimura, Yoshiyasu**
  **Inagi-shi Tokyo 206-8555 (JP)**
- **Yabe, Yoshikazu**
  **Inagi-shi Tokyo 206-8555 (JP)**
- **Kisuno, Futoshi**
  **Inagi-shi Tokyo 206-8555 (JP)**
- **Hirano, Takahiro**
  **Inagi-shi Tokyo 206-8555 (JP)**
- **Nishide, Kenzo**
  **Kawasaki-shi, Kanagawa 211-8588 (JP)**
- **Baba, Shunji**
  **Kawasaki-shi, Kanagawa 211-8588 (JP)**

(74) Representative: **Sunderland, James Harry**
  **Haseltine Lake LLP**
  **Lincoln House**
  **300 High Holborn**
  **London**
  **WC1V 7JH (GB)**

Remarks:
This application was filed on 27-09-2010 as a divisional application to the application mentioned under INID code 62.

(54) **Display element having wall structure, method of driving the display element and non-contact IC card as portable display device using the display element**

(57)   A display element comprising two substrates which oppose each other and a display portion which is sandwiched by the substrates, comprising:

a wall structure bearing a substrate on portions other than the display portion, in which the wall is perpendicular to the substrate and a surface perpendicular to the wall is adhered to the substrate, wherein:

the display portion has a structure in which a plurality of numbers or characters are arranged, the wall structure forms blocks for the respective numbers or the respective characters, and the respective blocks are connected to each other by injection paths for liquid crystal.

F I G. 17

EP 2 278 390 A1

**(Cont. next page)**

FIG. 18

## Description

## Technical Field

The present invention relates to, for example, a liquid crystal display element, a method of driving the liquid crystal display element and a non-contact IC card serving as a portable display device, and particularly to a display element using, for example, cholesteric liquidcrystal whichmaintains a display even when power supply is cut, a method of driving the display element using the cholesteric liquid crystal and an IC card, greatly improving mechanical strength of the display element using the cholesteric liquid crystal and comprising an antenna structure utilizing a multilayer printed circuit board.

## Background Art

Recently, in the field of physical distribution or the like to which a contact IC card, a bar code and the like are applied, a non-contact IC card, a RF (radio frequency) tag and the like which have excellent durability and convenience have been spreading. From now on, it is expected that new application fields such as electronic money will also develop so that usage of a card and a tag which conduct wireless communications with external devices will further spread. The IC card is excellent for recording information, however it has the defect that recorded contents can not be confirmed until the card is read by a dedicated device. It is desired that the recorded contents can be confirmed visually in the case of a reward card or a ticket book for transport facilities.

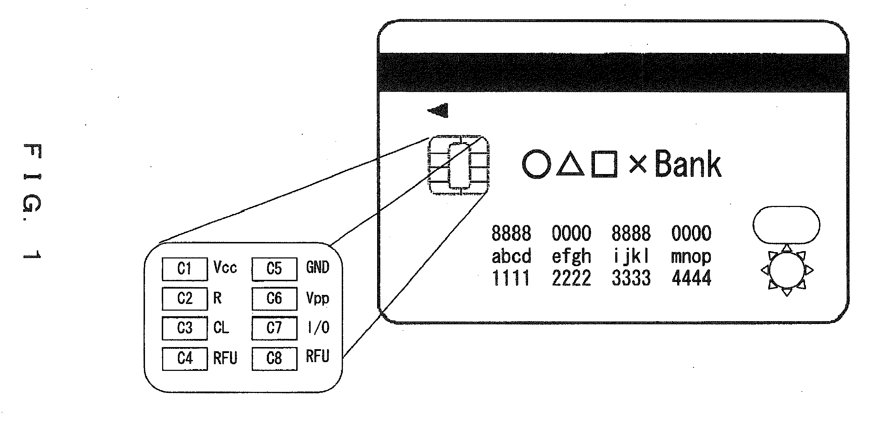

Fig. 1 shows an example of a conventional contact IC card. The contact IC card comprises terminals C1 to C8 for transmission of data and electric power by contacting an IC card reader/writer, and for example, $V_{cc}$ used as a power supply voltage for a circuit is supplied to the terminal C1.

For the conventional contact IC card, media whose contents can be visually confirmed based on a display using magnetic flake powder or heat writing using leuco dyes have been proposed. For the contact IC card, a dedicated device into which the IC card is inserted is prepared, and the dedicated device comprises a display content writing device such as a magnetic head or a thermal head. The non-contact IC card or the RF tag which are expected to spread from now on can not comprise the conventional write head. The non-contact IC card and the RF tag have to conduct a display in accordance with electric signals supplied by wireless communication, accordingly a liquid crystal method which can be electrically driven or an electrophoretic display is required.

Regarding the IC card comprising a display element, there are documents such as below. In a Patent Document 1, the IC card comprising the display element is disclosed and use of a non-contact type and a liquid crystal display is proposed. In a Patent Document 2, a wireless tag that can directly read and display tag information is disclosed, and also, use of electronic paper is proposed.

    Patent Document 1
    Japanese Utility Model Application Publication No. 7-30384 "IC card"
    Patent Document 2
    Japanese Patent Application Publication No. 2002-236891 "Wireless tag comprising data display function"

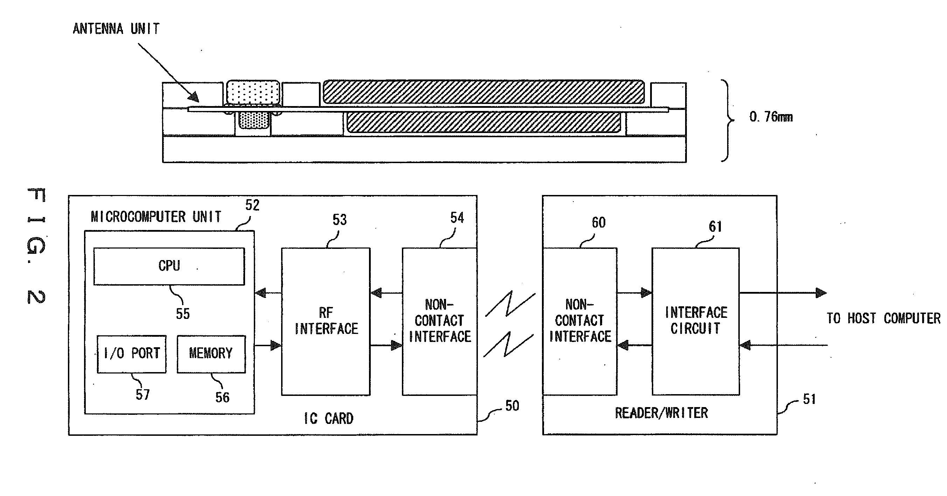

Fig. 2 explains an example of a configuration of the non-contact IC card. In Fig. 2, for example, a close coupling IC card 50 transmits and receives data to/from a card reader/writer 51. As shown in a cross sectional view in an upper view, the close coupling IC card comprises an antenna unit for communications.

The close coupling IC card 50 comprises a microcomputer unit 52, a RF interface 53, a non-contact interface 54, and the microcomputer unit 52 comprises a CPU 55, memory 56, an I/O port 57 and the like.

The card reader/writer 51 comprises a non-contact interface 60 as a communication interface with the close coupling IC card 50, and an interface circuit 61 as an interface with a host computer.

Actual use of the IC card and the RF tag as display elements is not realized because there is a serious problem. The problem is physical durability. For example, a liquid crystal display has to pass a bending resistance tests and an environment test which are standardized by JIS. A conventional liquid crystal display can not pass such tests. For example, the IC card is required to be undamaged after repeated operations of bending, by 2cm, the central portion of the long side of 85mm more than five hundred times. The conventional liquid crystal display can not satisfy this requirement because of damage to the substrate, misalignment, peeling of sealing members and the like. A considerable pressure from a conveying roller is applied to a surface of a card when the contact card or a hybrid card (including both functions of contact and non-contact types) is inserted into a reading device. In the conventional liquid crystal display, liquid crystal is accumulated to one side of the display by the pressure from the roller so that a sealing member is broken along the edge portion and the liquid crystal leaks, and accordingly, the function of a liquid crystal display element is lost.

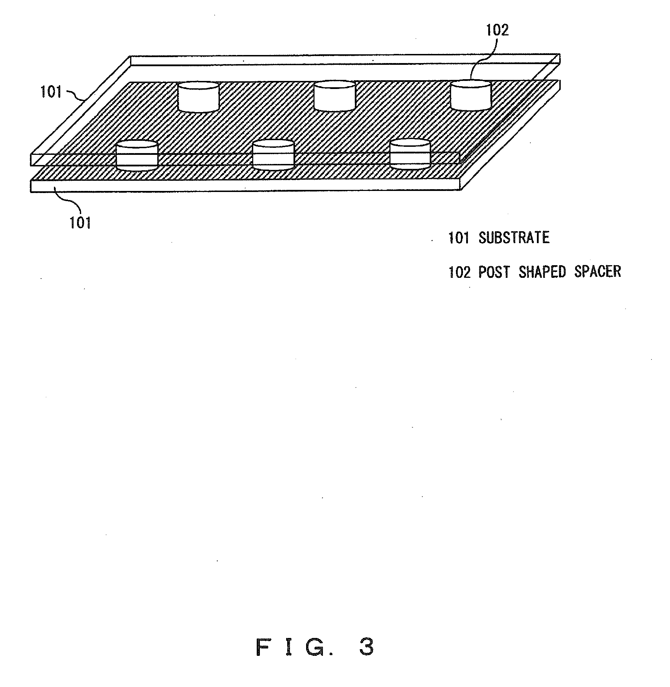

Fig. 3 shows an example of a structure of a conventional liquid crystal cell which uses post shaped spacers. Post shaped spacers 102 are set between two substrates 101 in order to support the substrates. Use of these spacers and adhesive posts are proposed in a document below. However, there is a problem that the above structure is not sufficiently durable to be applied to the IC card.

    Patent Document 3
    Japanese Utility Model Application Publication No.

58-13515 "Liquid crystal display device"
Patent Document 4
Japanese Patent Application Publication No. 7-318912 "Liquid crystal panel frame, liquid crystal panel body and liquid crystal display"
Patent Document 5
Japanese Patent No. 3196744 "Liquid crystal display element and method of manufacturing the liquid crystal display element"

The structure of the liquid crystal cell in these Patent Documents 3 to 5 employs a matrix structure, therefore, the liquid crystal display is designed to have a high aperture ratio, i.e. the percentage of the area occupied by liquid crystal which is effective for display of the surface area of the cell, and there is no intent to use more than twenty percent of the area for the post shaped spacers. Accordingly, there has been a problem in view of the durability of the liquid crystal cell.

Also, in a commonly used calculator, liquid crystal is injected into the entirety of a cell of the liquid crystal display unit, and only limited portions are driven. Accordingly, there has been a problem that liquid crystal which is expensive is not used efficiently.

Next, selective reflection by cholestericliquid crystal, which has a semi-permanent memory function and is expected to be applied to a display unit of the IC card and electronic paper, has a long history having been discovered in a cholesterol derivative in 1888. In the Patent Document 6 below, a display element is disclosed in which two kinds of stable states i.e. a selectively reflecting state and a transmitting state are utilized by amixture of polymer network liquid crystal and chiral nematic liquid crystal. Chiral nematic liquid crystal is a kind of cholesteric liquid crystal, and has the same fundamental properties. Chiral nematic liquid crystal is made by adding a chiral material (chiral dopant) to the nematic liquid crystal and forming the cholesteric phase.

In the cholesteric liquid crystal (chiral nematic liquid crystal), a state transition between the planar state which is the reflecting state and the focal conic state which is the transmitting state is electrically controlled. The planar state and the focal conic state are semi-permanently maintained as long as external stress is not applied, in other words, the cholesteric liquid crystal has a semi-permanent memory function.

Patent Document 6
Japanese Patent Application Publication No. 6-507505 "Liquid crystal beam modulating device and liquid crystal material"

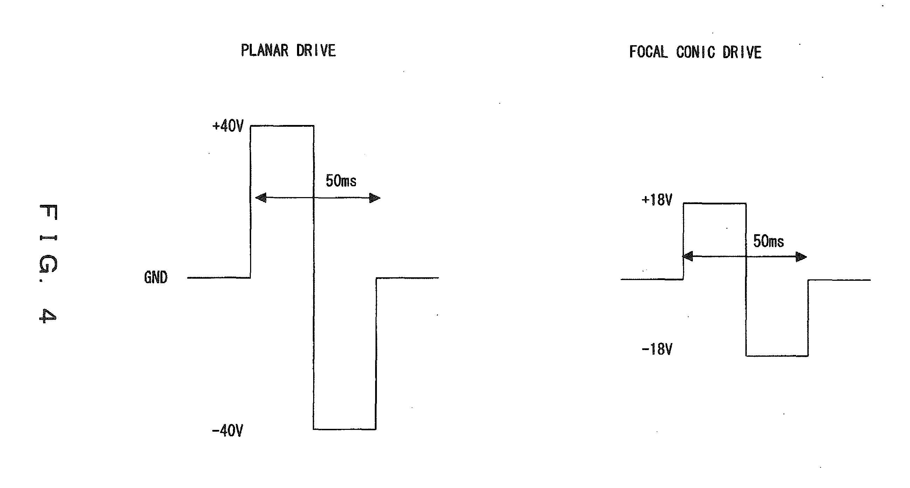

Fig. 4 explains driving waveforms for the above cholesteric liquid crystal. The cholesteric liquid crystal can be explained basically as liquid crystal that has two stable states i.e. a planar state and a focal conic state, although the property of the cholesteric liquid crystal will be further explained later. In the planar state, light with a frequency in a given range is selectively reflected, and in the focal conic state, any light is transmitted, in other word, the liquid crystal becomes transparent.

In order to cause liquid crystal to be in the planar state, i.e. to perform planar drive, a method of applying pulses on the order of $\pm 40V$ is employed as shown in the left of figure Fig. 4 for example, and in order to perform focal conic drive, a method of applying pulses on the order of $\pm 18V$ is employed as shown in the right of figure Fig. 4. The purpose of applying both positive and negative pulses is to prevent residual images and unevenness in display due to segregation or the like of the ions in the liquid crystal.

As above, a display element that uses the cholesteric liquid crystal has a semi-permanent memory function and is suitable for use in the IC card and the like. However, as explained in Fig. 4, two kinds of pulses having different peak values have to be selected in accordance with the kind of driving i.e., the planar drive and the focal conic drive, and the peak value is as high as the order of +40V, accordingly, IC cards without a power source have a problem that the power circuit becomes complicated.

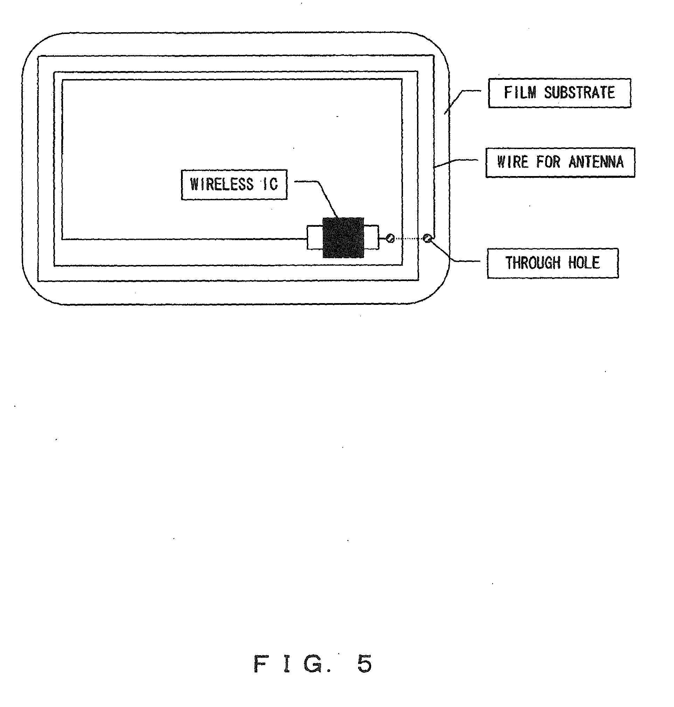

Next, problems relating to the structure of an antenna in the conventional non-contact IC card will be explained. Fig. 5 explains a wire for an antenna in the conventional commonly used IC card. As shown in Fig. 5, the wire for the antenna is arranged in the outermost portion of a film substrate and data transmitted from an IC card reader/writer is received by the antenna.

As previously explained, the IC card with a display function, for example, utilizing cholesteric liquid crystal requires a voltage with a relatively high value. In order to generate such a voltage, it is necessary that a coil pattern in which a voltage is induced by electromagnetic induction when a high frequency current flows in the wire for the antenna is provided in addition to the conventional antenna wiring so that the electric power is supplied to a display device driver by using the voltage which has been induced in the coil pattern.

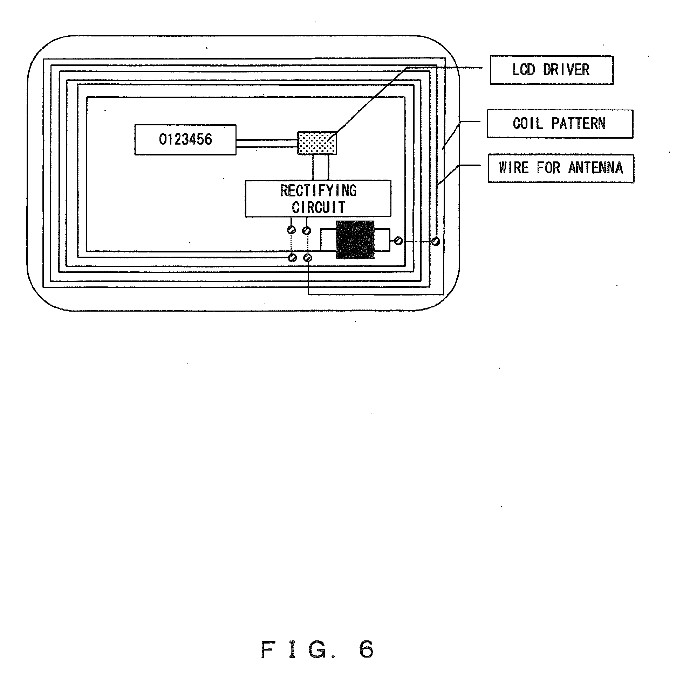

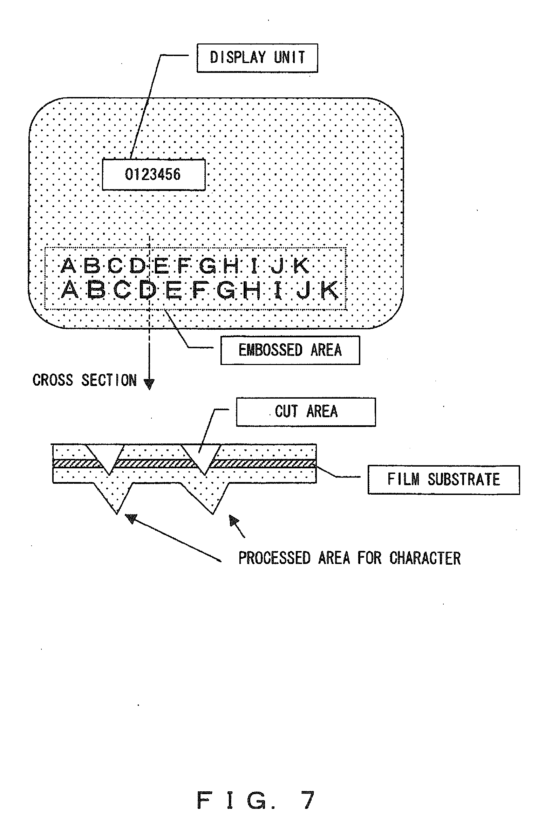

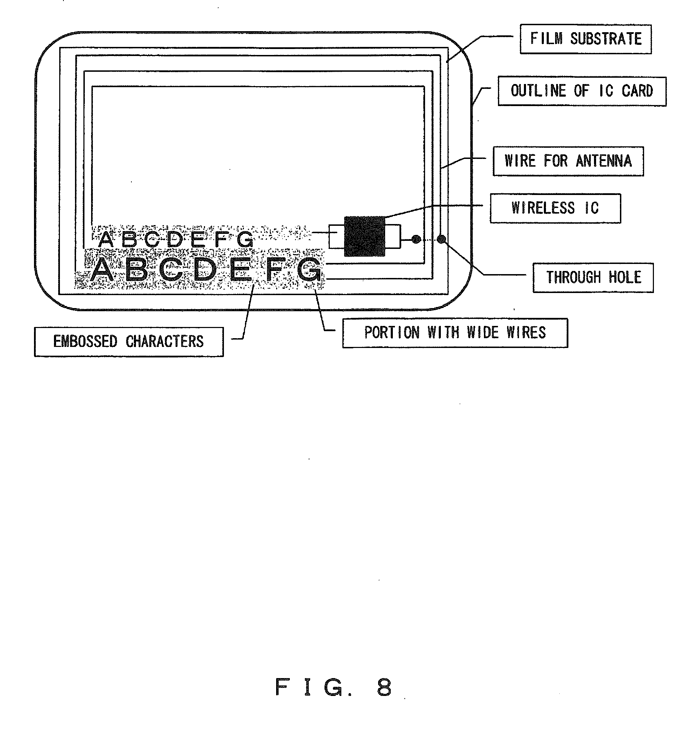

Fig. 6 explains a structure of the IC card in which the above coil pattern is arranged closely to the wire for the antenna in the vicinity of the periphery of the film substrate. In Fig. 6, operations of, for example, a LCD driver are performed by using the voltage induced in the coil pattern. However, in many cases of actual IC cards, for example in the case of a cash card for a bank or the like, an embossing process is performed in which character information such as numbers, alphabetic characters, or the like are embossed into the IC card. Fig. 7 and Fig. 8 explain problems accompanying the embossing process.

As shown in Fig. 7, in an embossed area, material is pressed in the thickness direction of the card by the embossing process, accordingly, there is a problem that if there are wires for the antenna or the coil pattern in this embossed area, the wires are cut.

A conventional counter measure against this problem is shown in Fig. 8. Fig. 8 shows an example of a conventional IC card in which the width of only the wires in the embossed area are made wider so that the wires are not cut even in the embossed area. In Fig. 8, only the wires for the antenna are arranged in the vicinity of the periphery of the film substrate and the coil pattern shown in Fig. 6 is not arranged there.

Accordingly, it is necessary that the wires for the antenna and the coil pattern are both arranged in the vicinity of the periphery of the film substrate as shown in Fig. 6, and when a plurality of voltages with different values are required as shown in Fig. 4, a plurality of coil patterns corresponding to the plurality of voltages are arranged closely to the wire for the antenna, and further the width of the respective wires and the coil patterns are made wider. However, such a structure can not be realized in a structure of the conventional substrate, which is problematic.

## Disclosure of Invention

It is a first object of the present invention to improve the mechanical durability of a portable display device such as for example a non-contact IC card and the like. It is a second object of the present invention to provide a method of driving an element that can reduce the cost for driving the element in the above portable display device. It is a third object of the present invention to provide a portable display device in which wires for antenna and coil patterns for supplying voltages to a display unit are efficiently arranged.

A display element according to the present invention comprises two opposing substrates, a display portion sandwiched by the substrates, and a wall structure for supporting the substrates in portions other than display portions. Surfaces of the wall structure are perpendicular to the substrates, and surfaces which are perpendicular to the above surfaces perpendicular to the substrates are adhered to the substrates. For example, an area of the surface which is perpendicular to the surface of the wall structure and which is adhered to the substrate can be larger than that of the surface of the substrate of the display portion.

The method of driving the display element according to the present invention is a method of driving a display element which utilizes cholesteric liquid crystal for example. Upon driving in a planar state of a liquid crystal cell, a method is employed in which after applying a pulse voltage to the liquid crystal cell, driving impedance on the electric power side is made lower than the impedance of the liquid crystal cell, and also an applied voltage is set to be zero. And upon driving to a focal conic state, a method is employed in which after applying a pulse voltage, the driving impedance is made higher than the impedance of the liquid crystal cell.

The portable display device according to the present invention is a device which uses a multilayer printed circuit board and in which an antenna pattern for receiving an external supply of data and electric power and coil patterns which are arranged closely to the antenna pattern for utilizing, as a power supply voltage for a display, a voltage generated by electromagnetic induction when current flows through the antenna pattern.

As above, according to the present invention, by providing a wall structure, between two opposing substrates, which bears the substrates on portions other than portions as display portions, the mechanical durability of the display element is greatly improved.

## Brief Description of Drawings

Fig. 1 shows an example of a conventional contact IC card;
Fig. 2 shows an example of a configuration of a conventional non-contact IC card;
Fig. 3 shows an example of a structure of a conventional liquid crystal cell which uses post shaped spacers;
Fig. 4 explains a conventional method of driving cholesteric liquid crystal;
Fig. 5 explains an example of a conventional non-contact IC card which comprises a wire for an antenna;
Fig. 6 explains an example of an IC card comprising a coil pattern for supplying electric power to a LCD driver;
Fig. 7 explains a problem in a conventional technique utilizing an embossing process;
Fig. 8 explains solutions for the problem of the embossing process in the conventional technique;
Fig. 9 explains a principle of a structure of a liquid crystal display element whose durability is improved in the present invention;
Fig. 10 shows an example of a configuration of a liquid crystal display element comprising a segmented shadow mask;
Fig. 11 explains an example of a configuration of a liquid crystal element comprising a light absorbing layer;
Fig. 12 explains a method of sealing a liquid crystal element;
Fig. 13 explains a common electrode removed portion in the liquid crystal element;
Fig. 14 explains seals and the transfer method in the liquid crystal element;
Fig. 15 explains manufacturing of a plurality of liquid crystal devices on one substrate;
Fig. 16 explains linear cuts formed on an opposing substrate for manufacturing a plurality of liquid crystal devices on one substrate;
Fig. 17 shows an example of a configuration of an injection path for liquid crystal for improving durability (first);
Fig. 18 shows an example of a configuration of an injection path for liquid crystal for improving durability (second);

Fig. 19 explains the planar state of cholesteric liquid crystal;
Fig. 20 explains the focal conic state of the cholesteric liquid crystal;
Fig. 21 shows response characteristics of a cholesteric liquid crystal;
Fig. 22 explains a planar drive waveform with a single polarity for the cholesteric liquid crystal;
Fig. 23 explains a focal conic drive waveform with a single polarity;
Fig. 24 explains a segmented display which uses a cholesteric liquid crystal;
Fig. 25 explains a bipolar planar drive waveform of the present embodiment;
Fig. 26 explains a bipolar focal conic drive waveform ;
Fig. 27 explains a unipolar planar drive waveform of the present embodiment;
Fig. 28 explains a unipolar focal conic drive waveform ;
Fig. 29 shows a configuration of a driver circuit in a display unit driver;
Fig. 30 is a time chart upon driving to the planar state;
Fig. 31 is a time chart upon driving to the focal conic state;
Fig. 32 shows an example of a configuration of an IC card which includes a hybrid type display unit;
Fig. 33 is a block diagram showing a configuration of an IC card including a display unit;
Fig. 34 shows an example of a configuration of an IC card which uses a multilayer printed circuit board;
Fig. 35 shows a cross sectional view of the card in Fig. 34;
Fig. 36 is a cross sectional view of an IC card in which a four-layer substrate is also used for components other than an antenna pattern or a coil patterns;
Fig. 37 shows an example of a configuration of an IC card including the antenna pattern and the coil patterns in a four-layer portion, and the other components in a two-layer portion; and
Fig. 38 is a cross sectional view of the IC card in Fig. 37.

**Best Mode for Carrying Out the Invention**

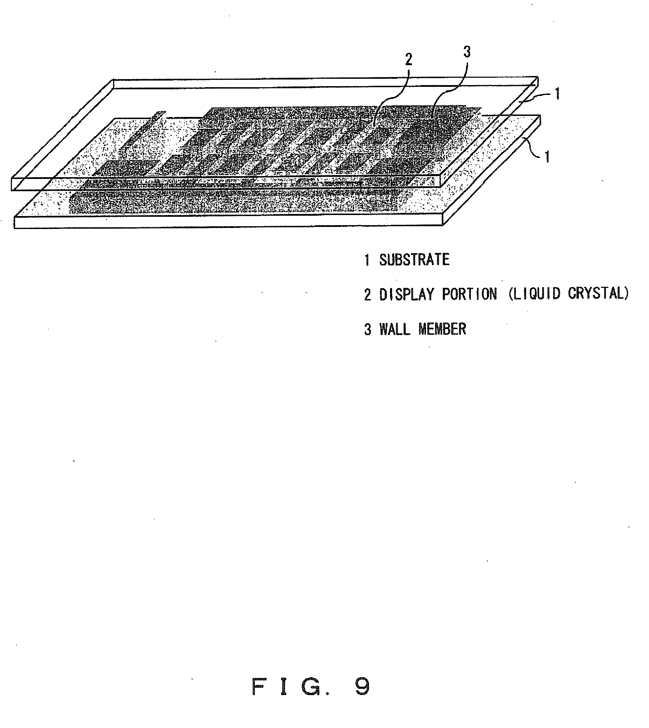

Fig. 9 explains a principle of a structure of a liquid crystal display element whose durability is improved in the present invention. In Fig. 9, a display portion 2 is sandwiched by two substrates 1, and the display portion 2 is enclosed by wall member 3. Liquid crystal is made continuous by being injected through an injection path.

Surfaces of the wall member 3 perpendicular to its wall are adhered to the substrates 1, and it is possible that areas of the adhered surfaces are larger than areas of surfaces as the liquid crystal display portion 2 facing the substrates 1.

Also, the display portion using the liquid crystal 2 is a segmented display portion, and the liquid crystal can be injected to respective segments of the segmented display portion through the injection path.

Also, between the liquid crystal as the display portion 2 and the substrates 1, a shadow layer which masks portions other than aperture portions which are smaller than the width of the liquid crystal injected into respective segments can be provided. Further, a light absorbing layer can be provided between the wall member 3 and the substrate, other than the substrate and the display portions between which the shadow layer is provided.

Also, the display portion 2 can be a display portion which uses cholesteric liquid crystal.

Also, it is possible that the display portion 2 employs a structure in which a plurality of numbers or characters are arranged, the wall member 3 forms a block for each character and the blocks are connected to each other through the liquid crystal injection path. Further, it is also possible that the block for each character comprises an inlet and an outlet for liquid crystal, the liquid crystal injection path in each block branches at the inlet and the branched paths are confluent with each other at the outlet.

A method of driving a display element according to the present invention is a method which is used for driving the display element utilizing the cholesteric liquid crystal, and in which upon driving to a planar state, a method is employed in which after applying a pulse voltage to the liquid crystal cell, the driving impedance of the electric power side is made lower than the impedance of the liquid crystal cell, and also an applied voltage is set to be zero, and upon driving to a focal conic state, a method is employed in which after applying a pulse voltage, the driving impedance is made higher than the impedance of the liquid crystal cell.

In this method, the polarity of a pulse voltage can be inverted at least once while the pulse voltage is applied to the liquid crystal cell. And also, a peak value of the pulse voltage can be set to be higher than a voltage which is high enough to cause the liquid crystal cell to certainly transition to the planar state.

Also, the value of a driving impedance after the pulse voltage is applied while performing planar drive can be a value such that a time for discharging the electric charge accumulated in the liquid crystal cell is shorter than the maximum value of the time necessary for the liquid crystal cell to transition to the planar state.

Also, a portable display device comprising the display element to which this driving method is applied and an antenna unit for receiving externally supplied data and power can be used.

Further, the portable display device according to the present invention can be a display device which uses a multilayer printed circuit board in which an antenna pattern for receiving externally supplied data and power and a coil pattern which is arranged closely to the antenna pattern and which is for using, as the power supply voltage, voltage generated by electromagnetic induction when a current flows through the antenna pattern are provided in respective layers different to each other in the multilayer printed circuit board. Further, portions in which the antenna pattern and the coil pattern are arranged can be on two or more layers, and portions in which the other components are arranged can be on one or more layers.

Next, embodiments according to the present invention including the structure of the liquid crystal display element explained in Fig. 9 will be further explained in detail.

In the general case where the liquid crystal element is used for an IC card or an RF (radio frequency) tag, numbers such as a pecuniary sum, a number, a sign, or alphabetic character, i.e. characters are used. For numbers, a method is commonly employed in which one digit is expressed by two or more of seven segments.

Only specific areas are used for display in the liquid crystal element, therefore, the liquid crystal does not have to be injected to areas outside of areas for displaying numbers. Therefore, as shown in Fig. 9, areas outside of the display (segment) portion are borne by the walls so that the IC card can have an outstanding durability. At least fifty percent with regard to the dimensions of the display element i.e. the surface area of the display element is borne by the walls so that a structure with super durability is realized.

The structure of the element according to the present invention can be used for the matrix display at the expense of aperture ratio, however the structure of the element according to the present invention is more suitable for the segmented liquid crystal display such as a display for numbers and characters. In a commonly used calculator, liquid crystal is injected into the entirety of a cell of the liquid crystal display unit, and only limited portions are driven. Accordingly, the liquid crystal which is expensive is not used efficiently. By employing the structure shown in Fig. 9, reduction of cost is realized.

As the wall member 3, a resist can be used as described in the previously explained Patent Document 5 so that the adhesion can be obtained by a heating process. The stability of a set value of thickness on the order of $5 \mu m$ for example is decreased by softening accompanying the heating process in accordance with the kind of resist. In such a case, the thickness can be stably controlled by using ball shaped spacers or fiber shaped spacers together. Post shaped spacers with high thickness stability (UV-setting resin or the like) can be used together, although the post shaped spacers are not adhesive. The ball shaped spacers or the fiber shaped spacers can be mixed into the wall member 3 or can be distributed on the substrates 1.

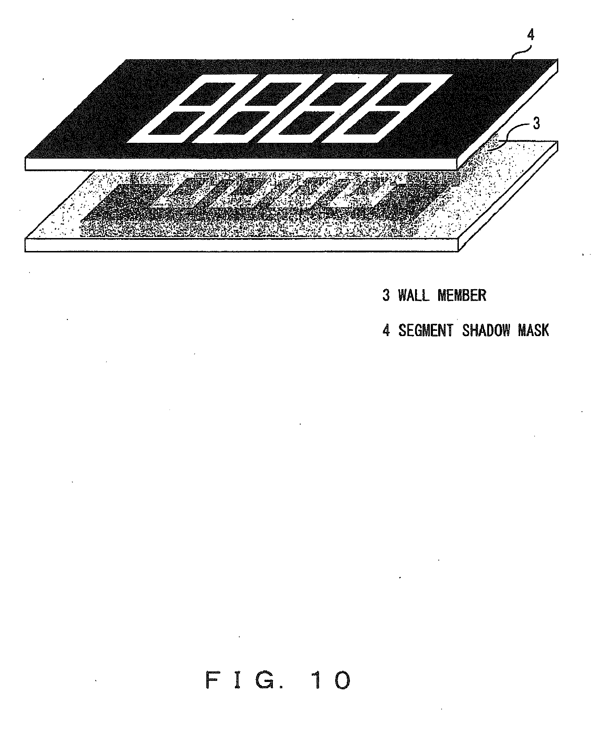

Fig. 10 shows an example in which a segmented shadow mask is used. Liquid crystal is required to have a memory function (function of maintaining displayed content after power is turned off) when it is tobe applied to an IC card or the like. Cholesteric liquid crystal which has the property of a selective reflection function and has the property of bistability is one candidate. The cholesteric liquid crystal has the property of bistability in which it assumes a reflecting state when a high voltage pulse is applied and in a transparent state when a low voltage pulse is applied. However, it is known that the state of this liquid crystal is affected by changes in pressure or temperature.

In areas where there are no segment electrodes (in the vicinity of the injection paths and the injection paths between segments), there is no opposing electrode, and electrical initialization can not be performed when the liquid crystal has transitioned into the reflecting state, and noise is displayed so that the visibility of numbers is reduced. Accordingly, a segmented shadow mask 4 is used to shadow light coming from areas unnecessary for the segmented display so that a good display is realized. By providing the shadow mask 4 having a segmented shape on the wall member 3 in Fig. 9, the injection paths which are necessary for injection of liquid crystal but which are unnecessary for the display can be masked so that the visibility can be improved.

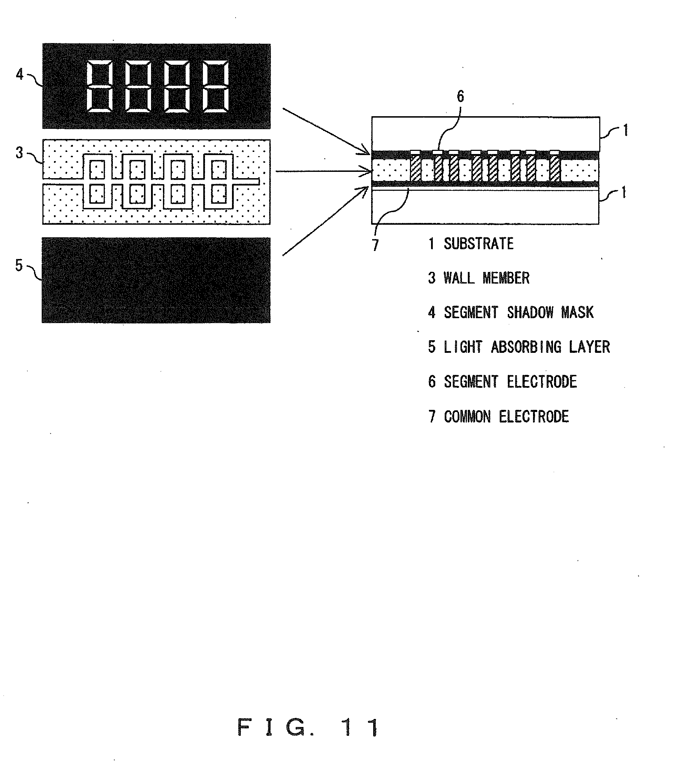

As shown in Fig. 11, it is desirable that the shadow mask 4 is provided inside the cell. The shadow mask 4 can be provided outside the substrate 1, however, it produces depth perception so that the visibility deteriorates. In order to secure a wide viewing angle, it is desired that the shadow mask 4 is formed inside the cell. The width of transparent portions of the shadow mask 4 are made narrower than those of the liquid crystal formed by the wall member 3. When the width of the transparent portions of the shadow mask 4 are as wide as those of the liquid crystal, there are no margins upon the alignment, and when the width of the transparent portions of the shadow mask 4 are larger, unnecessary portions become visible so that the visibility deteriorates.

The cholesteric liquid crystal has the property of bistability, i.e. the two modes of the reflecting state and the transmitting state. To use this liquid crystal as a display element, bright portions and dark portions are needed, and by absorbing incident light in the transmitting state, the reflecting state is used for the bright portions and the transmitting state is used for the dark portions. For this purpose, a light absorbing layer 5 is provided as shown in Fig. 11. It is desirable that the light absorbing layer 5 is formed on a common electrode 7 inside the cell. It is possible that the light absorbing layer 5 is provided outside the substrate 1, however contrast deteriorates because of the reflection of light even when the electrode is a transparent electrode such as ITO or the like. By the stacked structure as shown in Fig. 11, a display with a high contrast and a high visibility is realized.

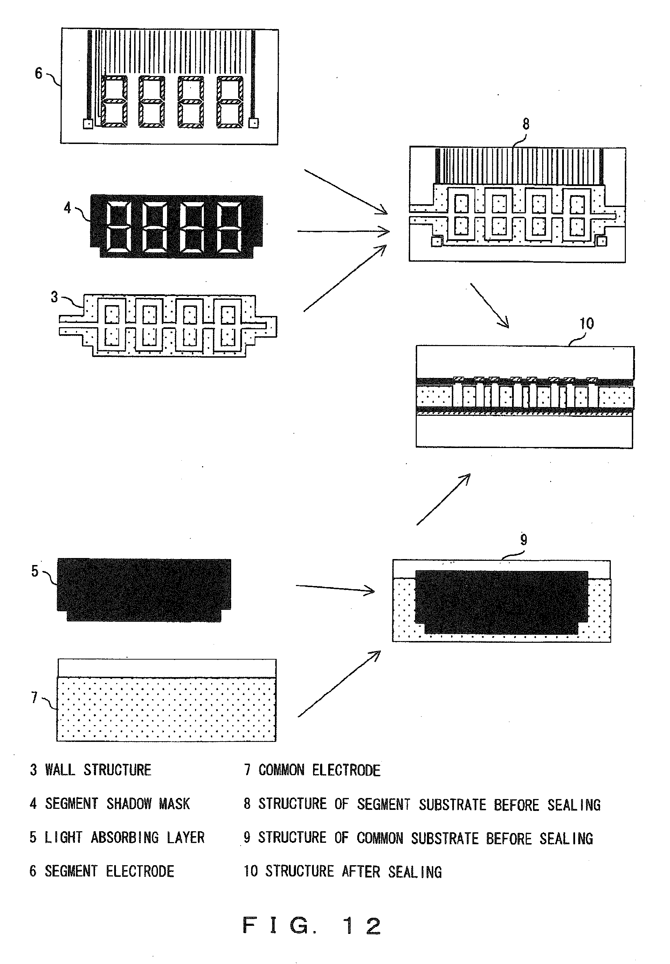

Fig. 12 shows a stacking process. A segmented shadow mask 4 is formed on a segmented electrode substrate in Fig. 12 by forming the segment pattern of the transparent electrode on the substrate, then, the wall member 3 is formed. The shadow mask 4 and the wall member 3 are formed by a photolithography technique or a printing technique. For the common substrate, the light absorbing layer 5 is formed on a solid pattern of transparent electrodes. As a method of forming the layer, a photolithography technique or a printing technology is employed. An electrode consisting of a black absorbing material can be used. On both of the substrates, respective layers are formed to be sealed together. The sealed substrates are adhered by a heating process. (Herein, explanations of a sealing member for other processes, application of a transfer member and a step of distributing ball shaped spacers are omitted)

Upon completion of these steps, in order to form an original pattern of the display, a technique with highly accurate alignment is required for the segmented substrate, the shadow mask and the wall structure. The opposing substrate as the common substrate consists of the light absorbing layer 5 and the common electrode whose configuration are solid so that such highly accurate alignment is not required. In order to construct a structure 10 after sealing in Fig. 12, it is sufficient to employ a process which does not require a highly accurate alignment sealing step.

In order to realize the durability against bending which is necessary for the IC card, a plastic substrate or a film substrate has to be used instead of a glass substrate. It is difficult to perform highly accurate sealing on the plastic or film substrate, so that the process step in the present invention is necessary. A structure of the element in which the light absorbing layer is provided on the segmented pattern, and the display is viewed from the side of the common electrode substrate is possible. However, only in the case of the structure in which the display is viewed from the side of the segmented substrate, can the accuracy of the alignment in the above described sealing step be lowered without adverse affects. In other words, by using the segmented electrode side as the displaying side, the manufacturing process can be simplified, and a higher yield and a lower cost can be realized.

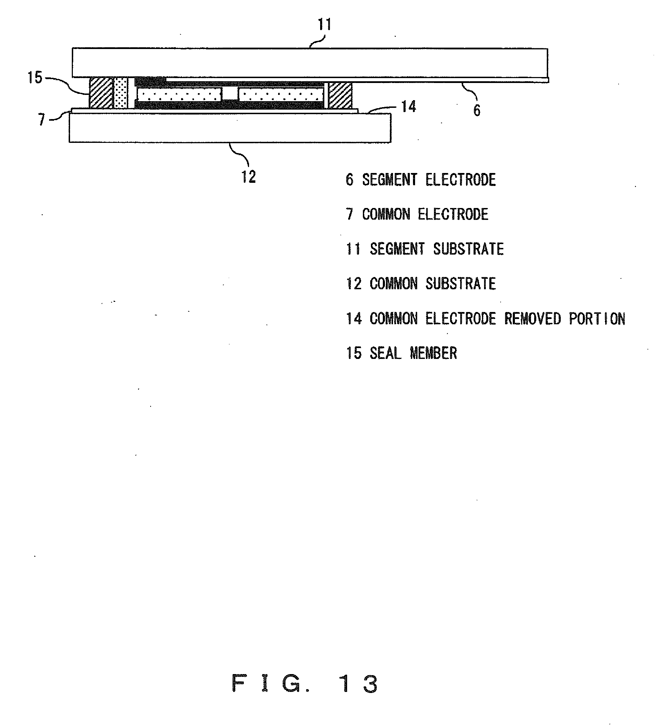

Fig. 13 is a cross sectional view of the element viewed from the side face. A side of a segmented substrate 11 is the displaying face. The segmented substrate 11 is larger than the common substrate 12 in order to provide a signal from a segment electrode 6 of the segmented substrate 11. A voltage is applied to the segment electrode 6 by adhering a flexible cable or the like. A voltage is applied to the common electrode 7 of the opposing substrate through a given wire of the segmented substrate by being connected to the given wire on the segmented substrate 11 by a conductive particle or conductive paste. The common electrode 7 is an area contact electrode and on a portion of the common substrate 12, an electrode removed portion 14 is provided.

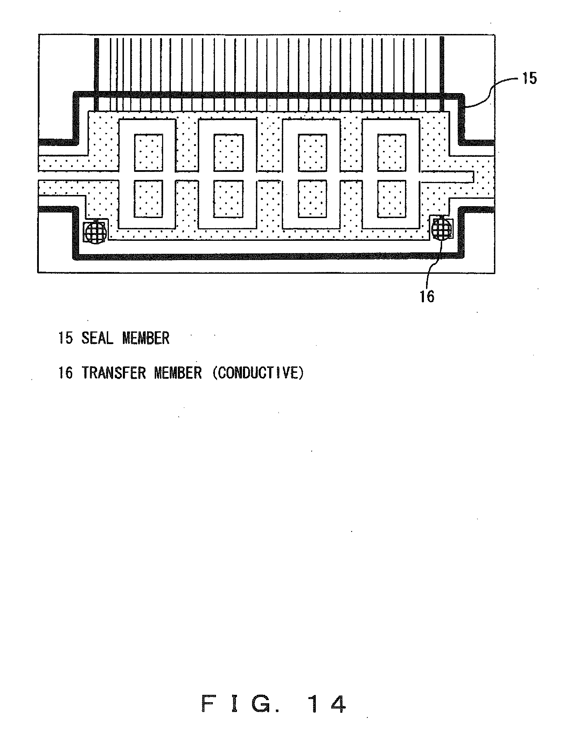

The common electrode removed portion 14 is a portion which is outside a seal member 15 (will be explained in Fig. 14) and which faces a drawing wire of the segmented display. Glass substrates are not subject to so much bending and lead to trouble rarely, however, in the film substrate it can lead to short circuiting between the common electrode and the drawing wire of the segmented display due to the bending of the film substrate. Because it is difficult to control spreading of the seal member, this portion employs a structure with a removed electrode. By employing such a structure, even when a film substrate is used, short circuiting is avoided so that a higher yield is realized. On the portions other than the portion facing the drawing wire of the segmented display, it is not necessary to remove the common electrode. Also, instead of removing the common electrode, material which is non-conductive can be applied.

Fig. 14 shows an arrangement of the seal member and transfer member. When the wall member 3 is sufficiently adhesive, the seal member 15 can be dispensed with, however, in order to obtain sufficient durability, the seal member 15 is used together with the wall member 3. In the wall member, paths for injection of liquid crystal are secured, and around the paths, the seal member 15 is formed. This structure is different from the conventional structure of liquid crystal devices because the seal member 15 and the liquid crystal do not contact each other. Accordingly, a special adhesive that does not damage liquid crystal does not have to be used. Conventionally, there has been a serious problem that display characteristics changed due to seeping of impurities from the seal member to the liquid crystal. By this structure in which the seal member and the liquid crystal do not contact each other, a greatly increased yield is realized. Also, the transfer member 16 does not contact the liquid crystal either so that highly conductive materials can be arbitrarily selected. The transfer member is required to have high durability for display driving.

In a commonly used liquid crystal element, a transfer member is arranged outside a seal member in order to avoid influences such as seeping of impurities into the liquid crystal, misalignment or the like. However, the substrate starts to peel from its periphery because of stress due to bending or the like, accordingly, it is desirable that the transfer member is formed inside the seal member. As shown in Fig. 14, the wall member encloses the liquid crystal, the transfer members are arranged outside the wall member, and the seal members are arranged still further outside, thereby, durability can be greatly improved. Arranging a plurality of the transfer members can improve reliability further, although only one transfer member is sufficient. Arranging display elements in symmetrical positions is also effective for improving the uniformity of display and the durability.

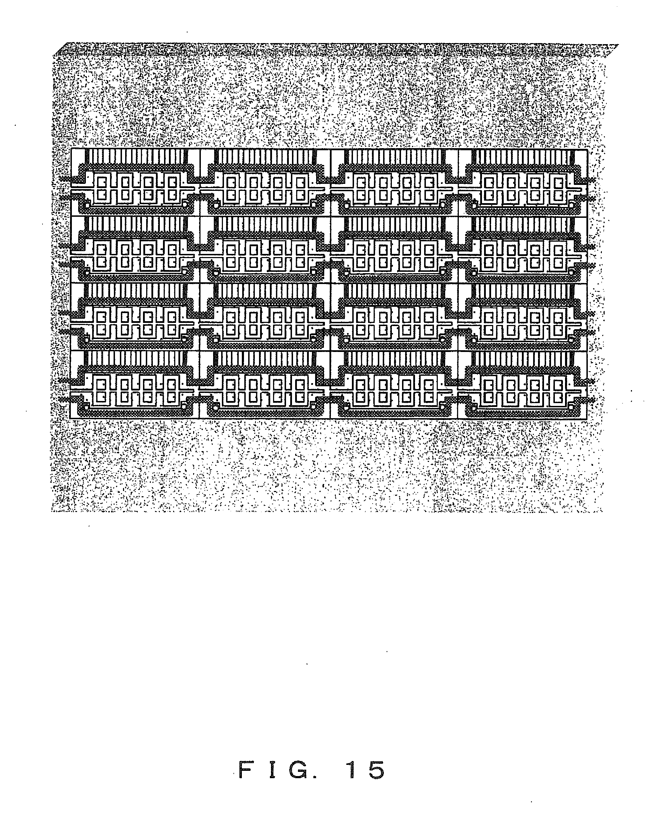

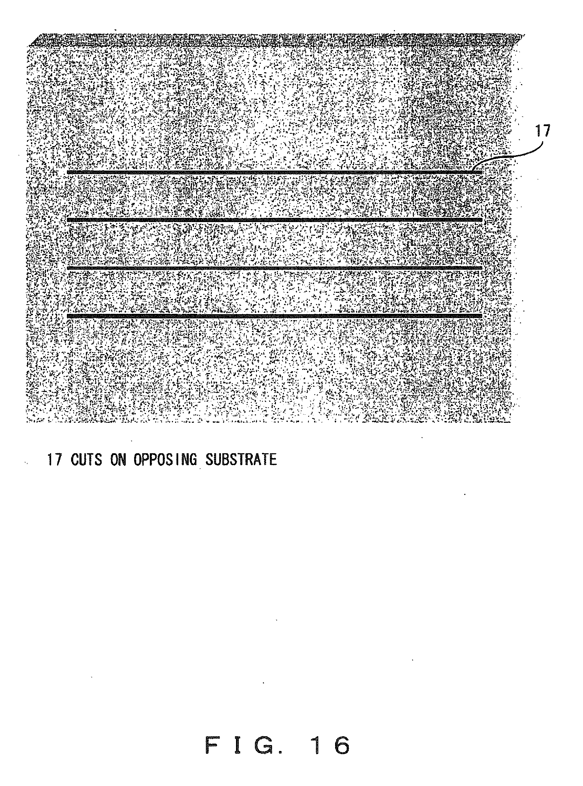

Fig. 15 and Fig. 16 show examples for manufacturing a plurality of liquid crystal devices from one substrate. As shown in Fig. 15, a plurality of elements is formed on one substrate. The seal members are successively formed over neighboring elements. Commonly, the seal members are formed by being applied by a syringe needle of a robot dispenser or the like. There is a printing method as a method of forming the seal members, however, the printing method is not suitable because there are three-dimensional structures on the wall member. When the seal member is formed on the opposing substrate, alignment accuracy upon sealing becomes a problem. As shown in Fig. 15, the seal member is applied to the substrate on which the wall member has been formed by the dispenser. It is known that excess application occurs at the starting point and the ending point in an application by the dispenser. In order to avoid this, seal members are formed successively over neighboring elements with the starting and ending points outside the elements. Accordingly, the excess applications do not occur on any element, so that a higher yield is realized due to uniformity of cell thickness and the like.

Fig. 16 shows an opposing substrate on the film substrate. Slit shaped scores are formed on the substrate. For manufacturing of a plurality of liquid crystal devices, it is necessary that the drawing wire of an electrode is exposed after the sealing, and the cutting of only one of the substrates is necessary. It is easy, in the case of a common glass substrate, to cut only one of the substrates by forming a linear cut on a surface with a diamond blade, and by a process for dividing a substrate (scribing process). However, the scribe process can not be employed for film substrates. When attempting to cut only one surface with a cutter blade or the like, the segment drawing wire is damaged. Therefore, like the opposing substrate (common substrate) shown in Fig. 16, the cutting is performed in advance on one substrate. According to the present method, wires are not damaged, and a higher yield is realized.

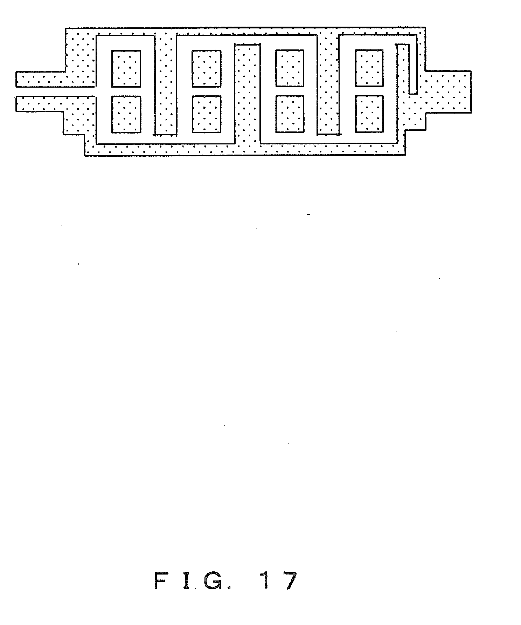

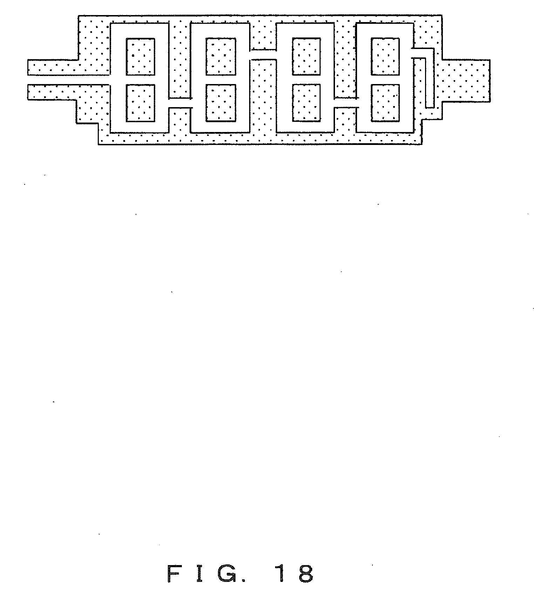

Fig. 17 shows an example of a configuration of a liquid crystal path in a highly durable liquid crystal element. As the liquid crystal, cholesteric liquid crystal is one candidate as previously explained. Cholesteric liquid crystal can change a display condition depending upon external stresses such as bending stress and pressing stress, or distortion. When the distortion inside a display cell due to bending is reduced, the change can be suppressed. When changes of the display due to bending at injection paths of liquid crystal in the structure shown in Fig. 11 are experimentally observed, it is found that the change at the linear central line is remarkable. It is recognized that the linear line is greatly distorted because there is no wall structure for bearing the distortion due to bending. Only a small change occurs when the line is short. The longer the length of the line is, the more frequently the distortion occurs. Therefore, as shown in Fig. 17 and Fig. 18, the injection path is modified so that a linear distance is made shorter and the change of the display due to bending can be suppressed.

In Fig. 17, in the second and the subsequent characters of "8", distances of the three routes from inlet to outlet of liquid crystal are the same as each other, therefore, the chance of involving bubbles upon the injection can be reduced. It is difficult to completely avoid the involving of bubbles upon vacuum injection with a high vacuum ratio. At the outlet of the last character "8", a dummy path is provided which serves as a buffering portion for unnecessary air.

Fig. 18 shows a structure of a liquid crystal path in which the distances of the three routes from the inlet to the outlet of the characters "8" of the liquid crystal are not the same as each other but the shortest in a straight line so that change of the display of the liquid crystal can be suppressed as much as possible. The end of the injection path is closed, however this end can be open. Injection by surface tension is possible, however, the open end has to be sealed. Therefore, to have an open end is not expedient.

In the present embodiment, a non-contact IC card is explained as an example of a portable display device, and as a display method in the non-contact IC card, applications of the ferroelectric liquid crystal, guest host liquid crystal, and an electrophoretic method are proposed, however, the ferroelectric liquid crystal has a low contrast, is not generally able to conduct a gradation display, and is very sensitive to shock. The guest host liquid crystal also has a low contrast, and the electrophoretic method has a problem in the memory function of display. Accordingly, a display method utilizing the cholesteric liquid crystal is explained in the present embodiment.

The cholesteric liquid crystal has merits such as that it has a higher brightness and a higher contrast than methods such as heat writing and magnetic writing, and that it is able to conduct color display and half tone display, and also that it has an almost semi-permanent memory function.

Now, a display device for a mobile device such as an IC card is further explained. Display devices for a computer or a mobile device commonly employ a CRT or a transmissive liquid crystal with a back light. All of these types are light emitting displays. Based on investigations in recent years, it is proposed that a display device which is of a non light emitting type and is a reflecting type is desirable to comfortably read displayed content such as text or the like. The reflecting device does not use a light source provided in the device, accordingly, it is effective for reducing power consumption.

Also, a display device with a memory function in which displayed content can be maintained even after power is turned off is desired for a further reduction of power consumption. A representative medium which is of the reflecting type and has a memory function is paper, which has a long history, and is also one of the tools which is indispensable today. A new display device called "electronic paper" in which the most important characteristics of paper such as being of the reflecting type and having the memory function and the characteristic of a display device which can arbitrarily change displayed content are combined, i.e. the characteristics of paper and display devices are intended to be combined, is gathering interest. And many companies are developing electronic paper in order to realize practical use of electronic paper. There are various fields to which electronic paper can be applied, and hereinafter, an example of an IC card with a display device which is gathering interest is explained.

In society today, many cards are used in daily life and society today is called a card society. Cards are used for various purposes such as a credit card, a cash card for a bank, a prepaid card such as a telephone card, an employee card in a company and a student card used in a school. The IC card started to be used in 1970, and since the idea of embedding an IC chip in a card arose, the IC card started to gather great interest and has spread steadily. In the twenty first century, the environment of the IC card has changed a lot due to the establishment of the Internet and the expansion of electronic commerce.

The IC card is a card made by embedding an IC chip in a plastic card such as a cash card or a credit card. The IC card has an operation function, and is far better than the magnetic card in the operation functions for processing data. The IC cards are classified as below depending upon whether or not the IC chip includes a CPU, or upon differences in interfaces. This classification is based on a Non-Patent Document 1 below.

Non-Patent Document 1
Front line of IC card business, Kogyo Chosakai Publishing, Inc. (November, 2000)

1. Classification depending upon presence/absence of CPU IC cards can be classified into "memory card" and "CPU card" types depending upon whether or not the card includes a CPU

- Memory card: A memory card includes a ROM for recording data, and the recording capacity of data is from 500 to 16, 000 characters, which is much larger than the 80 characters of the magnetic card. For memory, a PROM, an EPROM or an EEPROM is used.
- CPU card: A CPU card includes a CPU and has an operation function. The CPU checks the input code number against a code number in the card and controls access permission for data. Accordingly, the CPU card has a function of preventing illegal access and tampering, and has excellent security.

2. Classification depending upon interface
IC cards can be classified into "contact card" and "non-contact card" types depending upon the external interface

- Contact IC card: A contact IC card has a metal terminal on a surface of the card, and when inserted into a card reader/writer, electric power is supplied from the reader/writer to the terminal, and information is transmitted. Today, this contact IC card has spread widely, and has the characteristics of slow calculation and stable communications.

- Non-contact IC card: A non-contact IC card conducts communication of information via antennas embedded in the IC card and an IC card reader/writer by using electromagnetic waves. For this purpose, the IC card comprises an antenna at the periphery of the card. The non-contact IC card is classified into four types i.e., a close coupling type (2mm), a proximity type (10cm), a vicinity type (1m), and a remote coupling type (several meters) according to the communication distance between the IC card and the reader/writer. The non-contact IC card has excellent operability and durability. There is a hybrid card which is provided with both the characteristics of the contact card and the non-contact card.

A method in which a display unit or the like provided in the reader/writer is used is the most common for confirming information recorded to the IC card. In this method, the IC card has to be connected to the reader/writer. However, in recent years, there have been cases in which a heat writing method for conducting printing and erasing by using thermosensitive coloring material or a magnetic writing method for conducting printing and erasing by using a magnetic material have been applied to the IC card. These methods are utilized for a prepaid card or a reward card. Non-Patent Document 2 below discloses a rewritable recording medium using leuco dyes as a representative method of using a thermo-sensitive coloring material.

Non-Patent Document 2
Matsui, Torii, Furuya, Tsutsui: "Control of coloring and decoloring characteristics of leuco dye type rewritable recording media", Japan Hardcopy 2000 reports, P. 69 to P 72

However, in the above display methods, a display quality is of a low brightness and a low contrast so that visibility is low. Also, in both methods, display is conducted by a thermal head, a magnetic head or the like which directly contacts a recoding unit so that when displayed content is to be changed, the card has to be inserted into a reader/writer provided with a writing unit. The above display methods are not suitable for the non-contact IC card which is to be mainly used in the future. In order to display information on the non-contact IC card, a display method based on electrical driving is favorable. As the display method based on electrical driving such as this, the utilization of the previously explained cholesteric liquid crystal is favorable. Therefore, the driving method of cholesteric liquid crystal is explained further.

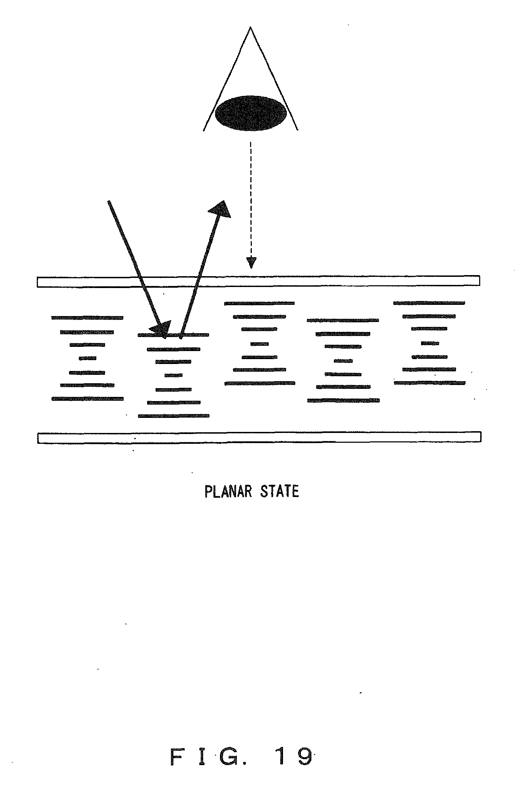

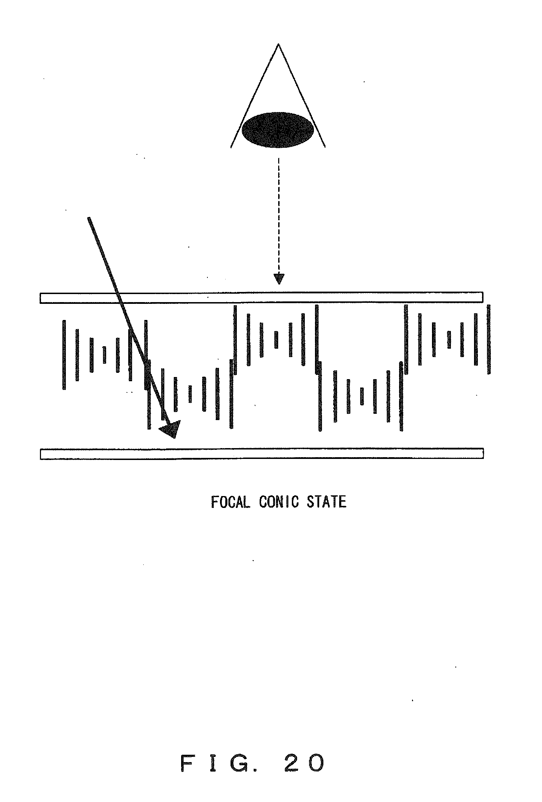

Fig. 19 and Fig. 20 respectively explain the planar state and the focal conic state of the cholesteric liquid crystal. In a display device using cholesteric liquid crystal, control between two states is conducted by switching alignment conditions of molecules of liquid crystal. Fig. 19 shows the planar state in which light with a wavelength in a specific range is selectively reflected. In this planar state, light circularly polarized along the helical pitch of molecules of liquid crystal and rotating in the same direction as the molecules is selectively reflected. The wavelength λ which maximizes the reflection can be obtained by an equation below by using the average index of refraction n and helical pitch p of a liquid crystal.

$$\lambda = n \times p$$

Reflection band $\Delta\lambda$ becomes wider as the refractive anisotropy $\Delta n$ of the liquid crystal increases.

Fig. 20 shows the focal conic state. In this state, almost all the incident light is transmitted, i.e. the liquid crystal becomes transparent. Accordingly, when a layer of an arbitrary color is provided below the liquid crystal layer, that color is expressed in the focal conic state. Therefore, for example, by setting the center of the wavelength band of reflected light in the planar state to around 550nm and by providing a light absorbing layer (black) under the liquid crystal layer, a monochromatic display in green with a black background can be conducted.

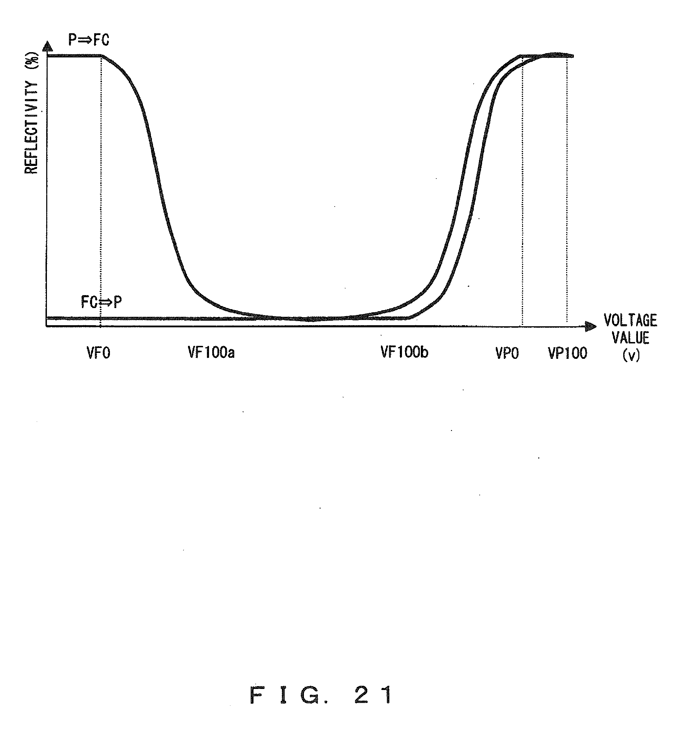

Fig. 21 shows the response characteristics of cholesteric liquid crystal. In Fig. 21, $V_{F0}$ is a voltage as a threshold value at which a transition to the focal conic state starts, voltages between $V_{F100a}$ and $V_{F100b}$ are voltages at which liquid crystal completely assumes the focal conic state, $V_{P0}$ is a threshold voltage at which a transition to the planar state starts, and $V_{P100}$ is a threshold voltage at which the liquid crystal completely assumes the planar state. When the initial state is the planar state (P), if a pulse voltage is increased within a range, the voltage is in a driving band for driving the liquid crystal to the focal conic state, and if the pulse voltage is increased further, the voltage again falls within a driving band for driving the liquid crystal to the planar state. When the initial state is the focal conic state (FC), as the pulse voltage is increased, the voltage falls within a driving band for driving the liquid crystal to the planar state.

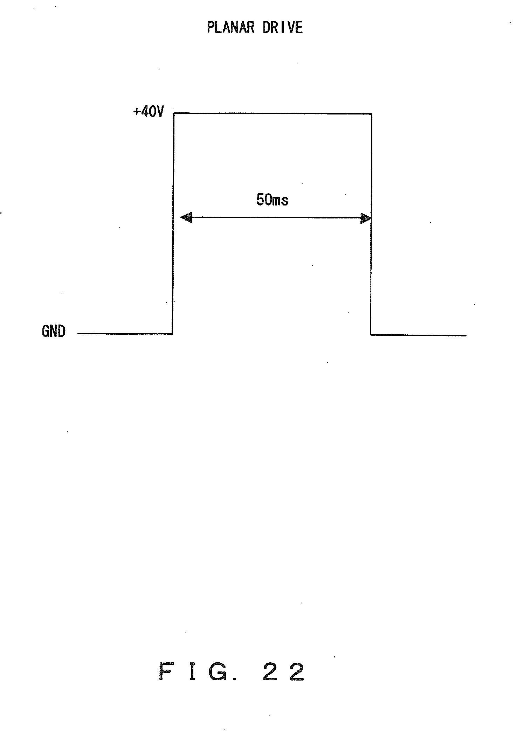

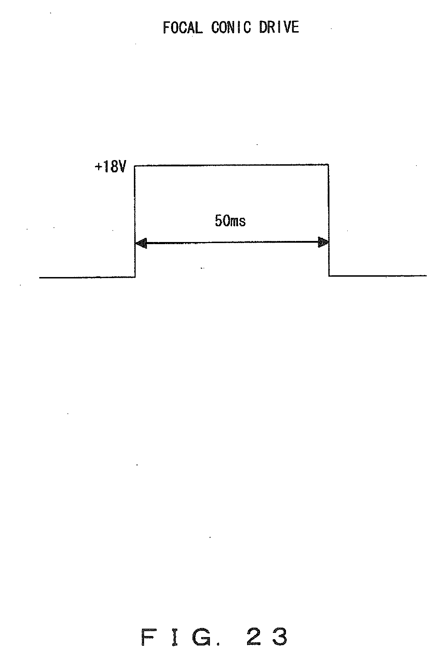

Fig. 22 and Fig. 23 explain general unipolar driving waveforms for the cholesteric liquid crystal. Driving of the cholesteric liquid crystal is conducted by the application of voltage pulses. When an intense electric field is applied, the helical structure of molecules of liquid crystal is unraveled, and a homeotropic state in which all the molecules are directed along the direction of the electric field is caused.

In Fig. 22, by applying pluses of +40V for example and thereafter removing the electric field, a helical structure in which helical axes of molecules of liquid crystal are perpendicular to electrodes is formed so that the liquid crystal assumes the planar state in which light is selectively reflected depending upon the helical pitch.

In Fig. 23, when pulses of +18V for example are applied and thereafter the electric field is removed, i.e., when an electric field is removed after applying an electric field which is so weak as not to completely unravel the helical axes of molecules of liquid crystal, the helical axes of liquid crystal are parallel to the electrodes so that the liquid crystal assumes the focal conic state in which incident light is transmitted. To the contrary, when an electric field is removed after applying an electric field with an intermediate intensity the liquid crystal assumes a state in which the planar state and the focal conic state are combined so that a half tone display is realized.

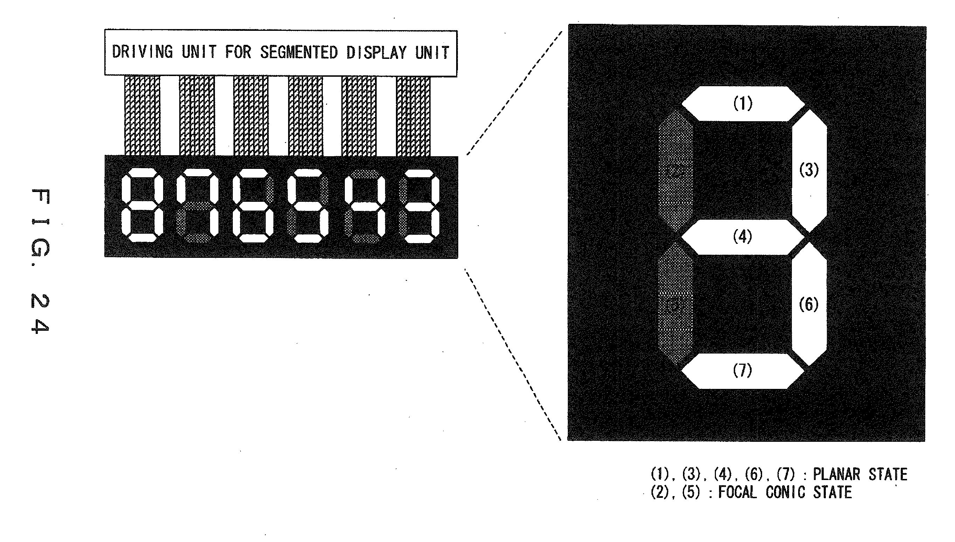

Fig. 24 shows an example of a segmented display which uses a cholesteric liquid crystal. For example, in the display of the last digit "3", the portions (2) and (5) are driven to be in the focal conic state, and the other portions of (1), (3), (4), (6) and (7) are driven to be in the planar state.

In order to drive the cholesteric liquid crystal as above, two kinds of driving voltage waveform as explained commonly in Fig. 4, or in Fig. 22 and Fig. 23 are used, which leads to the high cost of driving circuits. In the present embodiment, a driving method is employed in which both of the planar drive and the focal conic drive can be realized by one kind of waveform.

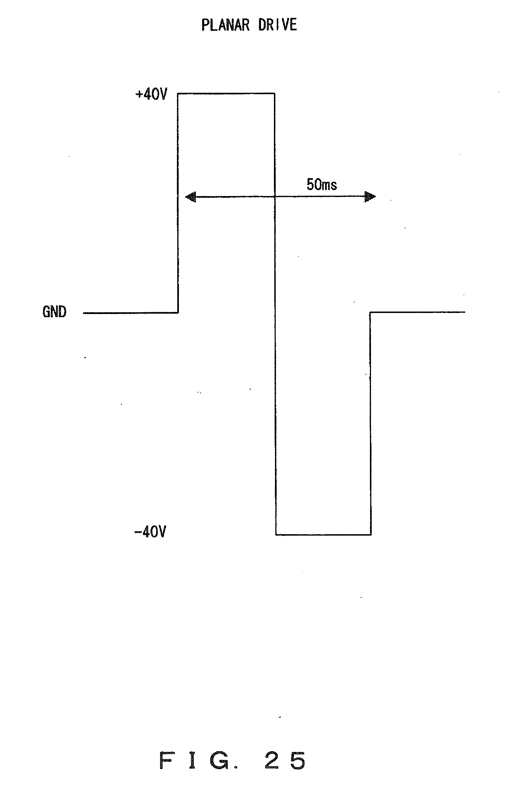

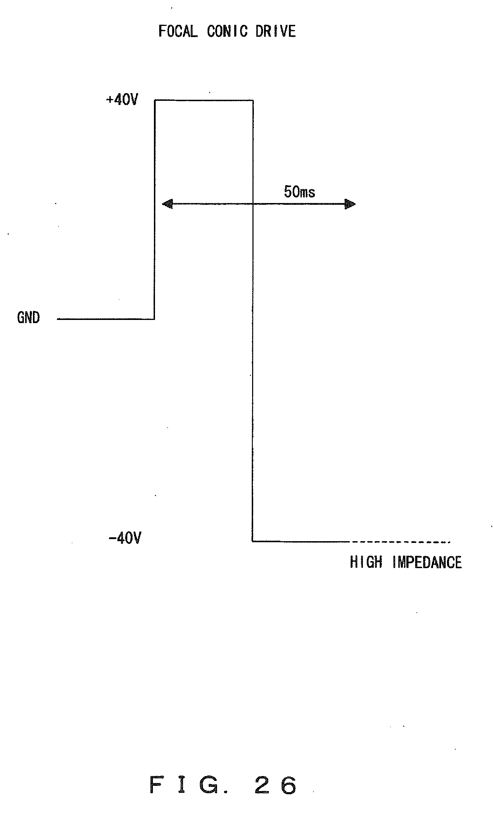

Fig. 25 and Fig. 26 respectively show examples of waveforms of bipolar pulses of the planar drive and the focal conic drive of the present embodiment. Fig. 25 shows an example of a waveform of the planar drive, and this waveform is the same as that of the planar drive of Fig. 4.

To the contrary, on a waveform of the focal conic drive shown in Fig. 26, a power circuit assumes a high-impedance state after positive and negative pulses having a peak value of 40V which is different from that in Fig. 4 are applied. In other words, when liquid crystal is to be driven to the focal conic state, a control is conducted in which the same pulse as that for driving the liquid crystal to the planar state is applied and thereafter, a driving circuit is caused to assume a high-impedance state while applying -40V to it.

The liquid crystal display cell serves as a capacitor with respect to electricity. Electric charge having been accumulated in the display cell when -40V is applied is slowly discharged in accordance with a time constant dependent on a resistance of the liquid crystal cell itself and a capacitance of the capacitor, and the liquid crystal cell assumes the focal conic state. Additionally, in Fig. 25 and Fig. 26, the polarity of the pulse is inverted once, however, the polarity of the pulse can be inverted multiple times. In other words, a waveform with a plurality of cycles can be applied, in which one cycle of a driving waveform includes one positive pulse and one negative pulse.

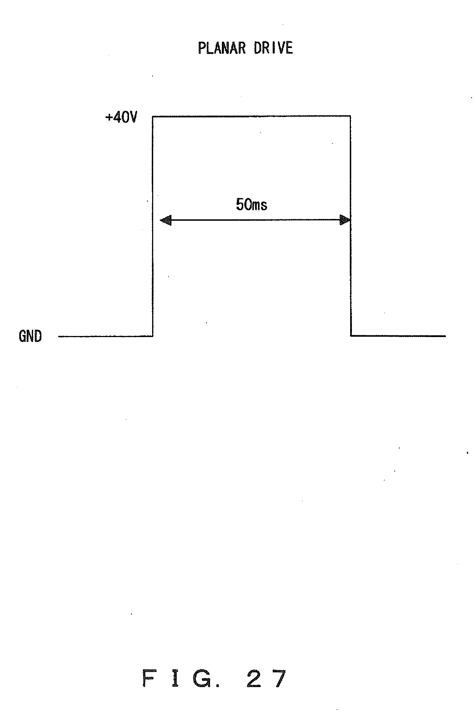

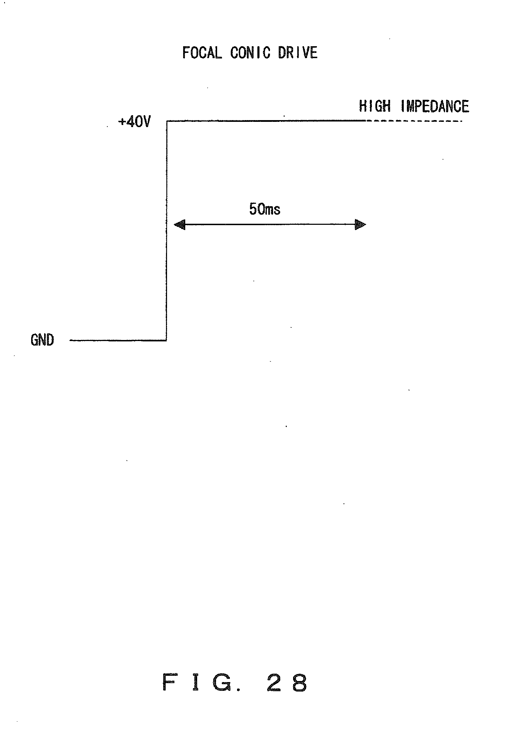

Fig. 27 and Fig. 28 explain a waveform of a unipolar pulse of the planar drive and a waveform of a unipolar pulse of the focal conic drive respectively. The waveform of the planar drive in Fig. 27 is the same as that explained in Fig. 22.

In a waveform of the focal conic drive shown in Fig. 28, the power circuit assumes a high-impedance state after the voltage value of +40V is maintained for 50ms in a similar way to the waveform of the planar drive in Fig. 27, and electric charges having been accumulated in the display cell are slowly discharged in a similar way in Fig. 26, and the display cell assumes the focal conic state.

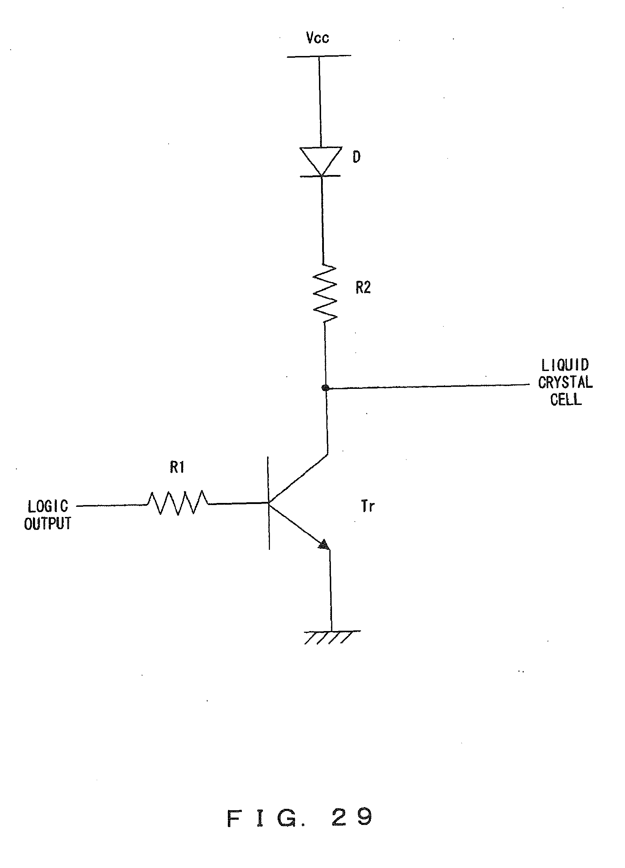

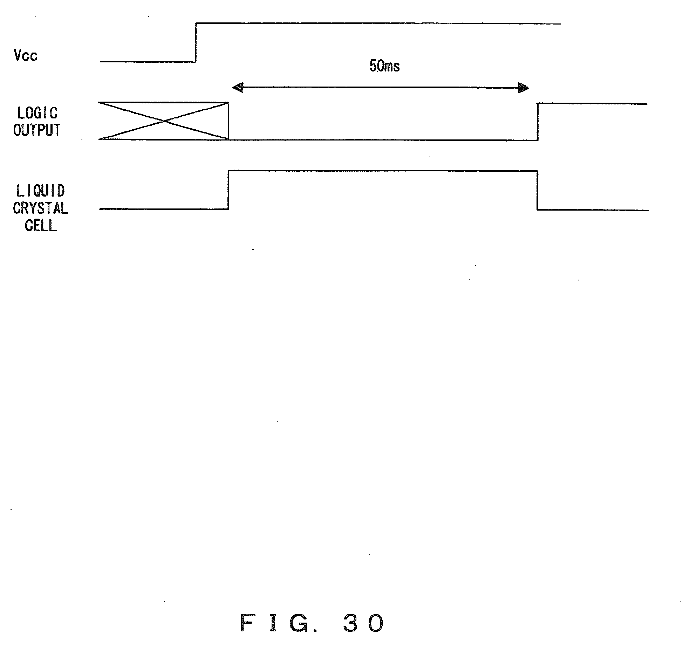

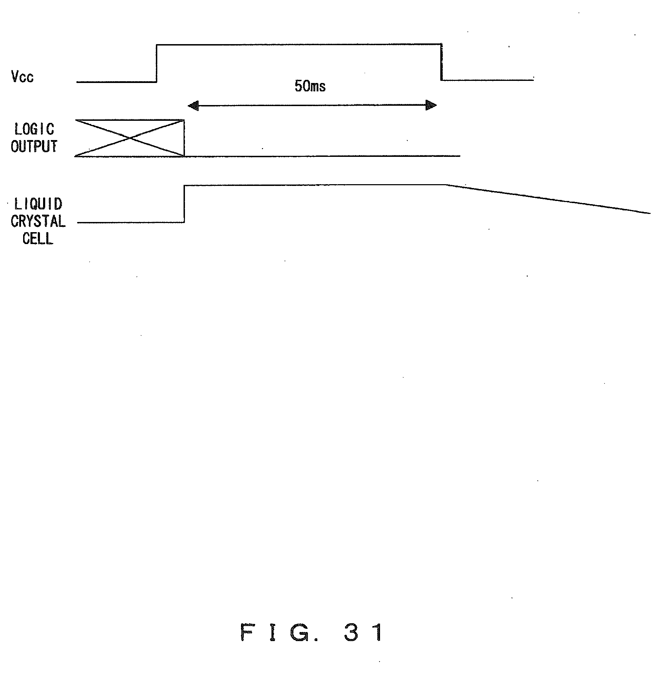

Fig. 29 shows an example of a configuration of a driver circuit of a display unit. Fig. 30 and Fig. 31 are operation time charts for this driver circuit. When liquid crystal is to be driven to the planar state, as shown in Fig. 30 the power supply voltage $V_{cc}$ is set to 40V, and thereafter a logic output is maintained at a low level (L) for 50ms. When the logic output becomes L, a transistor Tr in Fig. 29 is turned off, and the liquid crystal cell is charged to 40V via a diode D and a resistor R2. When the logic output is maintained at H for at least 1ms, the transistor Tr is turned on, and electric charge having been accumulated in the liquid crystal cell is rapidly discharged via the transistor Tr so that the liquid crystal cell assumes the planar state.

When the liquid crystal is to be driven to the focal conic state, as shown in Fig. 31 $V_{cc}$ is set to +40V, the logic output is maintained at L for 50ms, and thereafter the logic output is maintained at L until $V_{cc}$ falls and electric charge having been accumulated in the liquid crystal cell is discharged, thereby, the diode D and the transistor Tr are both turned off, and the power source side assumes a high-impedance state, so that the electric charge having been accumulated in the liquid crystal cell is slowly discharged via the resistance of the liquid crystal cell itself, and the liquid crystal cell assumes the focal conic state.

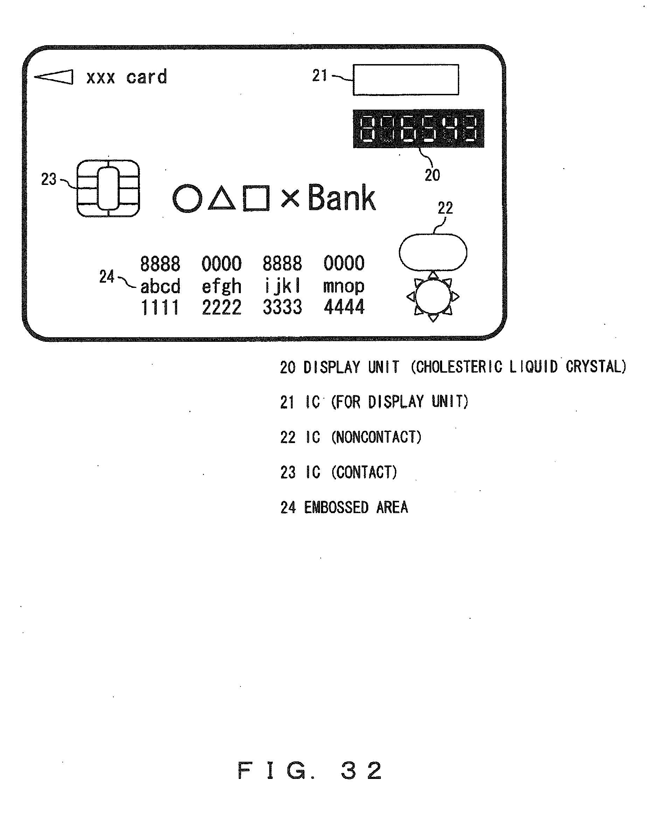

Next, a configuration of an IC card having a display unit using a chiral nematic liquid crystal as one kind of cholesteric liquid crystal for example will be explained. Fig. 32 shows an example of a configuration of the IC card which can be used as a hybrid type i.e. both as a contact type and a non-contact type, and which includes a display unit with a memory function i.e. a display unit utilizing chiral nematic liquid crystal.

A suitable amount of CB 15 which provides a twist in the right-hand direction is respectively added to the nematic liquid crystal and the chiral material, and the color of reflected light in the planar state is made green. This liquid crystal is sandwiched by glass substrates coated with ITO (Indium Tin Oxide) by evaporation deposition having a thickness of 100μm in order to prepare a glass cell. The thickness of the liquid crystal is 5μm.

In Fig. 32, a display unit 20 as a segmented driven element number display which uses this chiral nematic liquid crystal is provided at the right upper corner of the IC card, and an IC 21 for driving the element is embedded therein. This display unit is used for displaying account details in a cash card for example. On the card, an IC 22 for receiving data and electric power from a non-contact IC card reader/writer, an IC 23 for receiving electric power and data by being placed in contact with the reader/writer and an embossed portion 24 on which letters, numbers and the like are raised are provided.

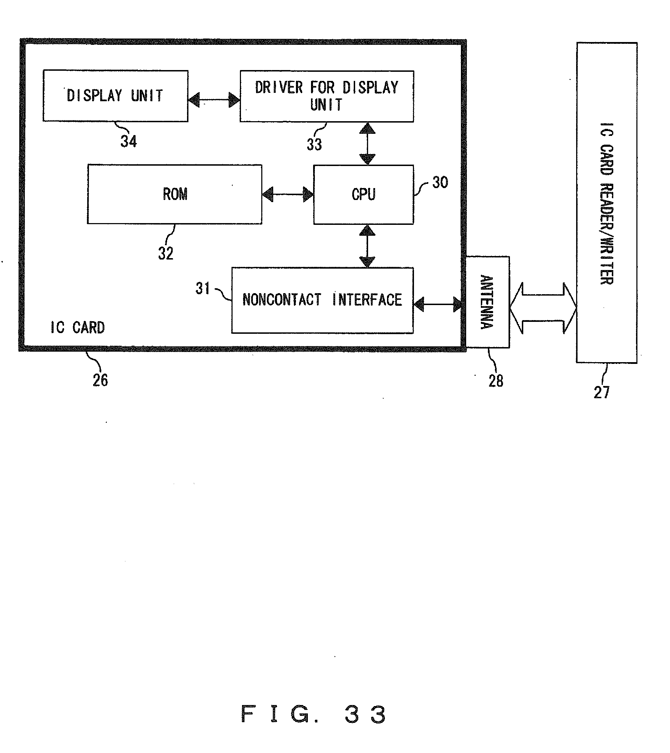

Fig. 33 shows an example of a configuration of the non-contact IC card. In Fig. 33, when an IC card 26 approaches an IC card reader/writer 27, the IC card 26 is supplied with electromagnetic waves via an antenna 28, and is supplied with data and electric power in order to start operation, and thereafter, transmits and receives information to/from the IC card reader/writer 27 in as required.

The IC card 26 comprises a CPU 30 for controlling the entirety of the card, a non-contact interface 31 for transmitting and receiving data and for receiving supply of electric power from the IC card reader/writer 27, read only memory 32 for storing data, a program or the like, a driver 33 for display unit and a display unit 34.

Next, an arrangement method of an antenna pattern and a coil pattern according to the present embodiment will be explained. As previously explained, in a non-contact IC card, in order to supply electric power to a circuit which drives a display unit using for example cholesteric liquid crystal, a coil pattern is provided in close proximity to an antenna on the IC card i.e., an antenna pattern to receive radio waves transmitted from the IC card reader/writer side, and the voltage which is induced in the coil pattern is used for driving the display unit by utilizing electromagnetic induction between the antenna pattern and the coil pattern upon receiving the radio waves by the antenna pattern.

However, as previously explained, an embossing process is performed on a credit card, a cash card and the like which are common usage examples of the IC card i.e., numbers or letters are mechanically raised on the surface of the card, accordingly, there has been a problem that it is difficult to suitably arrange, on the IC card, an antenna pattern and a coil pattern closely to each other. However, in the present embodiment, the coil pattern and the antenna pattern are provided on different layers by utilizing a multilayer printed circuit board so that the problem is solved.

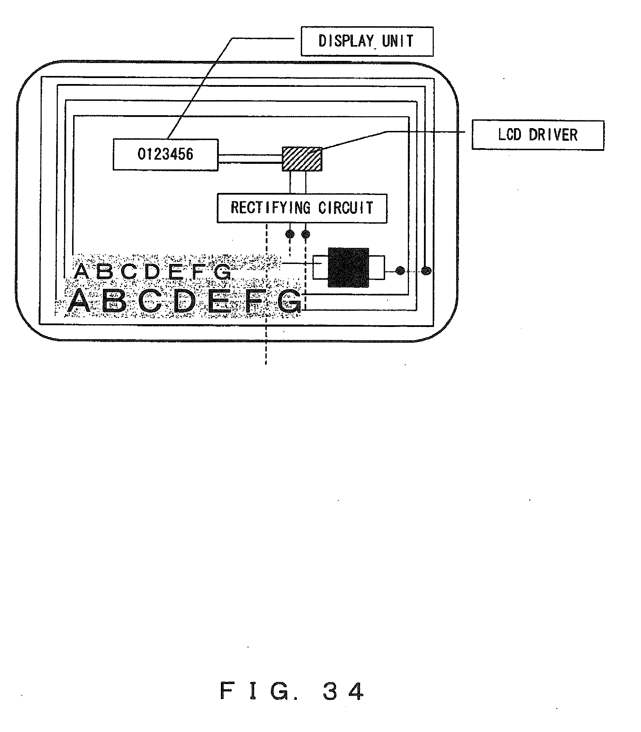

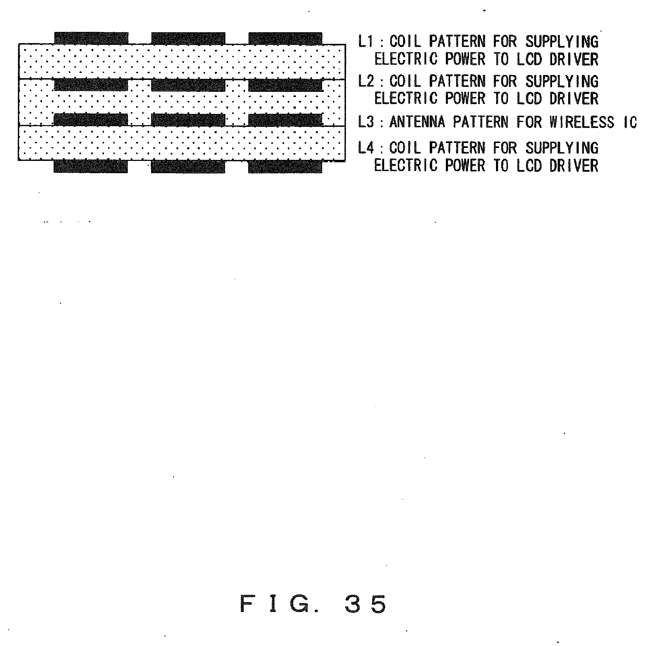

Fig. 34 and Fig. 35 respectively show examples in which the coil pattern is formed independently of the antenna pattern by using the multilayer printed circuit board. Fig. 34 shows a surface of the IC card, and Fig. 35 is a cross sectional view of the portion indicated by a dashed line in Fig. 34. In Fig. 34, in an embossed portion, wires can be made wider as explained in Fig. 8.

In Fig. 35, an antenna pattern for a wireless IC i.e., an antenna pattern for receiving radio waves from the IC card reader/writer is on one layer while coil patterns for supplying power to the LCD driver are on three different layers. This is because for example an existing LCD driver requires power supplies with several kinds of voltages, and the winding number of the coil pattern is not limited and a large winding number is realized due to a relatively high voltage such as for example 40V required as a driving voltage in a display unit using for example cholesteric liquid crystal.

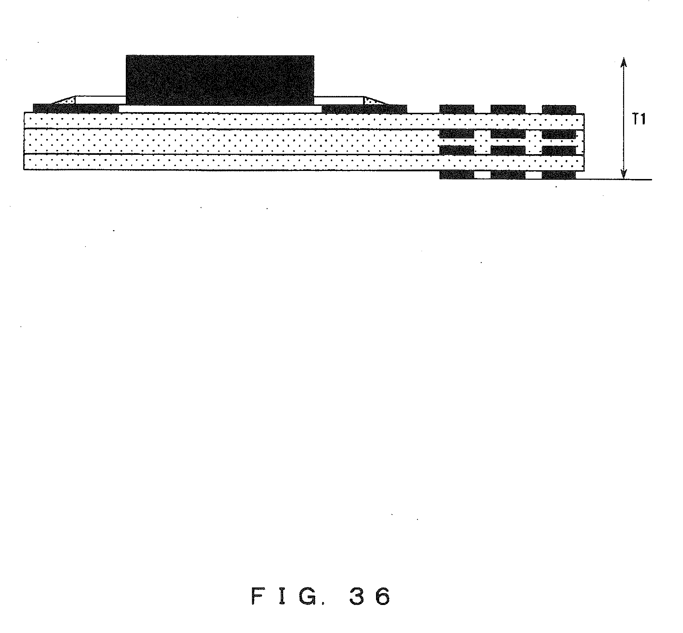

However, there is a possibility that when the antenna pattern and the coil pattern are respectively arranged on different layers by using a multilayer printed circuit board, the entire thickness T1 of a card can not be within the standard thickness of the IC card such as 0.8mm due to the thickness of the substrate and height of components as shown in Fig. 36.

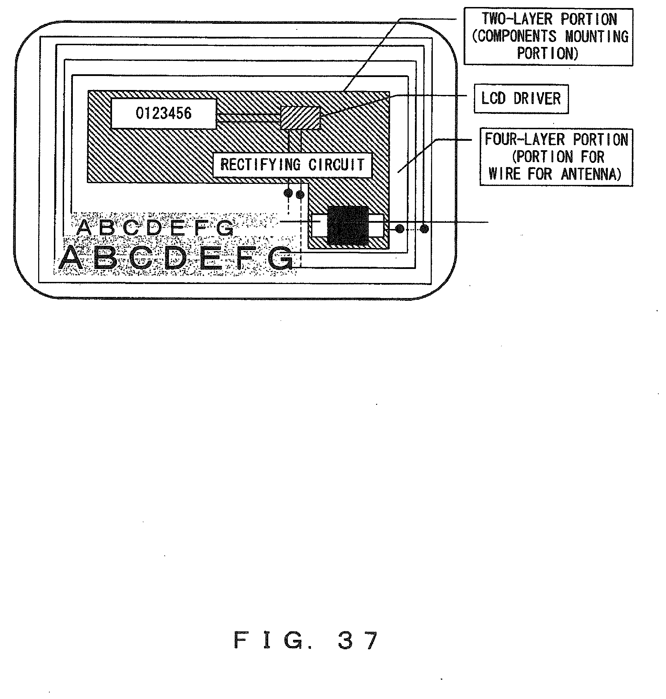

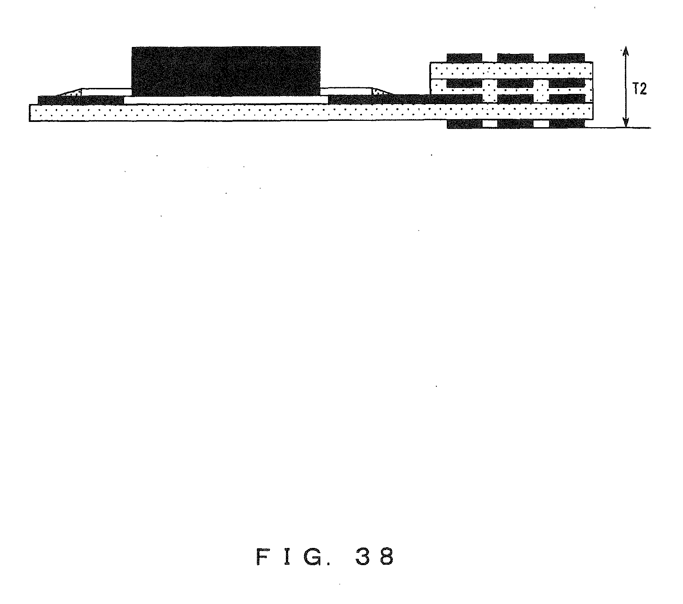

Fig. 37 and Fig. 38 respectively show examples of a configuration of the IC card which solves the above problem. In Fig. 37, a surface of the IC card is shown, and a mounting unit for components is provided in a two-layer portion of the multilayer printed circuit board and wiring units of an antenna pattern and coil patterns are provided in a four-layer portion of the multilayer printed circuit board.

In Fig. 38, a cross section of the IC card in Fig. 37 is shown. An entire thickness T2 including the two-layer portion as the component mounting unit and the four-layer portion as the wiring units for the antenna pattern and the coil patterns is smaller than the thickness T1 shown in Fig. 36. Additionally, in Fig. 38, the four-layer portion for the antenna pattern and the coil patterns naturally exist on the left side of the card, however, these portions are not shown.

As described above, according to the present embodiment, by the antenna pattern and the coil patterns being provided on different layers by utilizing the multilayer printed circuit board, relatively high voltages are generated by the coil patterns and plural kinds of voltage values can be obtained, which is effective for expanding variation of use of a non-contact IC card which has a display function and does not have a power source.

**Applicability to industries**

The present invention can naturally be applied to industries manufacturing a liquid crystal display elements, a driver for a display element and portable display devices such as an IC card, electronic paper and the like, and also to any industry that uses these elements and display devices.

Aspects of the invention are indicated in the following paragraphs.

A. A display element comprising two substrates which oppose each other and a display portion which is sandwiched by the substrates, comprising:

a wall structure bearing a substrate on portions other than the display portion, in which the wall is perpendicular to the substrate and a surface perpendicular to the wall is adhered to the substrate.

B. The display element according to paragraph A, wherein:

an area of the surface which is perpendicular to the wall and which is adhered to the substrate is larger than an area of a surface of the display portion which faces the substrate.

C. The display element according to paragraph A, wherein:

the display portion is a segmented display portion which employs liquid crystal, and the wall structure comprises a liquid crystal injection path through which liquid crystal can be injected to respective segments of the segmented display portion.

D. The display element according to paragraph C, comprising:

a shadow layer which blocks light incident on portions other than an aperture portion which has a width smaller than a width of the liquid crystal injected into the respective segments, between the display portion and the substrate.

E. The display element according to paragraph D, comprising:

a light absorbing layer between the wall structure and the substrate, other than the substrate and the display portion between which the shadow layer is provided, among the two substrates.

F. The display element according to paragraph A, wherein:

the display portion is a display portion which uses cholesteric liquid crystal.

G. The display element according to paragraph A, wherein:

the display portion has a structure in which a plurality of numbers or characters are arranged, the wall structure forms blocks for the respective numbers or the respective characters, and the respective blocks are connected to each other by injection paths for liquid crystal.

H. The display element according to paragraph G, comprising:

inlets and outlets for liquid crystal corresponding to the blocks for the respective numbers or the respective characters, wherein:

a path for liquid crystal in each block branches at the inlet and paths are confluent with each other at the outlet.

I. A method of driving a display element which uses cholesteric liquid crystal, comprising:

causing a driving impedance of an electric power side to be lower than an impedance of a liquid crystal cell, and also setting an applied voltage to be zero after applying a pulse voltage to the liquid crystal cell upon driving to the planar state of the liquid crystal cell; and

causing the driving impedance to be higher than an impedance of the liquid crystal cell after applying a pulse voltage upon driving to a focal conic state.

J. The method of driving a display element, according to paragraph I, wherein:

polarity of the pulse voltage is inverted at least once while the pulse voltage is applied to the liquid crystal cell.

K. The method of driving a display element, according to paragraph I, wherein:

a peak value of the pulse voltage is higher than a voltage which is high enough to cause the liquid crystal cell to certainly transit into a planar state.

L. The method of driving a display element, according to paragraph I, wherein:

a value of the driving impedance of the electric power side after applying the pulse voltage upon driving to the planar state is a value such that a time for discharging electric charge accumulated in the liquid crystal cell is equal to or shorter than the maximum value of a time necessary for the liquid crystal cell to transit to the planar state.

M. The method of driving a display element, according to paragraph I, wherein:

the driving method is employed as a method of driving a display element in a portable display device comprising a display element and an antenna unit for receiving externally supplied data and electric power.

N. A portable display device using a multilayer printed circuit board, wherein:

an antenna pattern for receiving externally supplied data and electric power; and a coil pattern which is arranged closely to the antenna pattern and which uses, as a power supply voltage for a display, a voltage generated by electromagnetic induction when current flows through the antenna pattern are arranged respectively on different layers of the multilayer printed circuit board.

O. The portable display device, according to paragraph N, wherein:

a portion in which the antenna pattern and the coil pattern are arranged has two or more layers, and a portion in which other components are arranged has one or more layers.

## Claims

1. A display element comprising two substrates which oppose each other and a display portion which is sandwiched by the substrates, comprising:

a wall structure bearing a substrate on portions other than the display portion, in which the wall is perpendicular to the substrate and a surface perpendicular to the wall is adhered to the substrate, wherein:

the display portion has a structure in which a plurality of numbers or characters are arranged, the wall structure forms blocks for the respective numbers or the respective characters, and the respective blocks are connected to each other by injection paths for liquid crystal.

2. The display element according to claim 1, comprising:

inlets and outlets for liquid crystal corresponding to the blocks for the respective numbers or the respective characters, wherein:

a path for liquid crystal in each block branches at the inlet and paths are confluent with each other at the outlet.

F I G. 1

F I G. 2

101 SUBSTRATE

102 POST SHAPED SPACER

F I G. 3

FOCAL CONIC DRIVE

+18V

50ms

-18V

PLANAR DRIVE

+40V

50ms

GND

-40V

F I G. 4

FILM SUBSTRATE

WIRE FOR ANTENNA

WIRELESS IC

THROUGH HOLE

F I G. 5

| | |
|---|---|
| | LCD DRIVER |
| | COIL PATTERN |
| | WIRE FOR ANTENNA |

0123456

RECTIFYING
CIRCUIT

F I G. 6

DISPLAY UNIT

0123456

A B C D E F G H I J K
A B C D E F G H I J K

EMBOSSED AREA

CROSS SECTION

CUT AREA

FILM SUBSTRATE

PROCESSED AREA FOR CHARACTER

F I G. 7

FILM SUBSTRATE

OUTLINE OF IC CARD

WIRE FOR ANTENNA

WIRELESS IC

THROUGH HOLE

PORTION WITH WIDE WIRES

EMBOSSED CHARACTERS

A B C D E F G

A B C D E F G

F I G. 8

1 SUBSTRATE

2 DISPLAY PORTION (LIQUID CRYSTAL)

3 WALL MEMBER

F I G. 9

3 WALL MEMBER

4 SEGMENT SHADOW MASK

F I G. 1 0

4

3

5

6

1

7

1

1 SUBSTRATE

3 WALL MEMBER

4 SEGMENT SHADOW MASK

5 LIGHT ABSORBING LAYER

6 SEGMENT ELECTRODE

7 COMMON ELECTRODE

F I G. 1 1

3 WALL STRUCTURE        7 COMMON ELECTRODE

4 SEGMENT SHADOW MASK        8 STRUCTURE OF SEGMENT SUBSTRATE BEFORE SEALING

5 LIGHT ABSORBING LAYER        9 STRUCTURE OF COMMON SUBSTRATE BEFORE SEALING

6 SEGMENT ELECTRODE        10 STRUCTURE AFTER SEALING

F I G. 1 2

6 SEGMENT ELECTRODE

7 COMMON ELECTRODE

11 SEGMENT SUBSTRATE

12 COMMON SUBSTRATE

14 COMMON ELECTRODE REMOVED PORTION

15 SEAL MEMBER

F I G. 1 3

15 SEAL MEMBER

16 TRANSFER MEMBER (CONDUCTIVE)

F I G. 1 4

F I G. 1 5

17 CUTS ON OPPOSING SUBSTRATE

FIG. 16

F I G. 1 7

F I G. 1 8

PLANAR STATE

F I G. 19

FOCAL CONIC STATE

F I G.  2 0

F I G. 2 1

PLANAR DRIVE

F I G. 2 2

FOCAL CONIC DRIVE

+18V

50ms

FIG. 23

(1), (3), (4), (6), (7) : PLANAR STATE
(2), (5) : FOCAL CONIC STATE

F I G. 2 4

PLANAR DRIVE

F I G. 2 5

FOCAL CONIC DRIVE

F I G.  2 6

PLANAR DRIVE

F I G. 2 7

FOCAL CONIC DRIVE

FIG. 28

F I G. 2 9

Vcc

50ms

LOGIC
OUTPUT

LIQUID
CRYSTAL
CELL

F I G. 3 0

Vcc

50ms

LOGIC
OUTPUT

LIQUID
CRYSTAL
CELL

F I G. 3 1

xxx card

21

☐☐☐☐☐☐ 20

23

○△□ × Bank

22

8888  0000  8888  0000
24 ~ abcd  efgh  ijkl  mnop
1111  2222  3333  4444

20 DISPLAY UNIT (CHOLESTERIC LIQUID CRYSTAL)

21 IC (FOR DISPLAY UNIT)

22 IC (NONCONTACT)

23 IC (CONTACT)

24 EMBOSSED AREA

F I G.  3 2

F I G. 3 3

DISPLAY UNIT

LCD DRIVER

0123456

RECTIFYING CIRCUIT

A B C D E F G

ABCDEFG

F I G. 3 4

L1 : COIL PATTERN FOR SUPPLYING
      ELECTRIC POWER TO LCD DRIVER
L2 : COIL PATTERN FOR SUPPLYING
      ELECTRIC POWER TO LCD DRIVER
L3 : ANTENNA PATTERN FOR WIRELESS IC
L4 : COIL PATTERN FOR SUPPLYING
      ELECTRIC POWER TO LCD DRIVER

F I G. 3 5

T1

F I G. 3 6

TWO-LAYER PORTION
(COMPONENTS MOUNTING
PORTION)

LCD DRIVER

FOUR-LAYER PORTION
(PORTION FOR
WIRE FOR ANTENNA)

0123456

RECTIFYING CIRCUIT

ABCDEFG
ABCDEFG

F I G. 3 7

F I G. 3 8

Europäisches
Patentamt

European
Patent Office

Office européen
des brevets

# EUROPEAN SEARCH REPORT

Application Number

EP 10 18 0396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2002 328374 A (OPTREX KK; ASAHI GLASS CO LTD) 15 November 2002 (2002-11-15) | 1 | INV. G02F1/1343 G06K19/077 |
| Y | * abstract; figures 1-3 * | 2 | |
| X | JP 55 045035 A (CITIZEN WATCH CO LTD) 29 March 1980 (1980-03-29) | 1 | ADD. G02F1/1339 G02F1/1341 G02F1/137 G09G3/36 |
| Y | * abstract; figures 1-4 * | 2 | |
| Y | EP 1 253 460 A2 (AGILENT TECHNOLOGIES INC [US]) 30 October 2002 (2002-10-30) * paragraph [0017] * | 2 | |
| Y | US 2002/012094 A1 (SUZUKI SHUNJI [JP]) 31 January 2002 (2002-01-31) * abstract * | 2 | |

**TECHNICAL FIELDS SEARCHED (IPC)**

G02F
G06K
G09G

The present search report has been drawn up for all claims

| Place of search | Date of completion of the search | Examiner |
|---|---|---|
| Munich | 22 November 2010 | Wolfrum, Georg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 18 0396

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2010

| Patent document cited in search report | | Publication date | Patent family member(s) | | Publication date |
|---|---|---|---|---|---|
| JP 2002328374 | A | 15-11-2002 | NONE | | |
| JP 55045035 | A | 29-03-1980 | JP<br>JP | 1336402 C<br>61002931 B | 11-09-1986<br>29-01-1986 |
| EP 1253460 | A2 | 30-10-2002 | DE<br>JP<br>US | 60210361 T2<br>2003005202 A<br>2002159020 A1 | 15-03-2007<br>08-01-2003<br>31-10-2002 |
| US 2002012094 | A1 | 31-01-2002 | JP<br>JP<br>TW | 4542243 B2<br>2002055351 A<br>575764 B | 08-09-2010<br>20-02-2002<br>11-02-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7030384 A
- JP 2002236891 A
- JP 58013515 A
- JP 7318912 A
- JP 3196744 B
- JP 6507505 A